# EUROPEAN PATENT SPECIFICATION

(11) **EP 2 380 649 B1**
(45) Date of publication and mention of the grant of the patent: **08.04.2015**
(21) Application number: 11250154.9
(22) Date of filing: 11.02.2011
(51) Int. Cl.: B01D 46/24

(54) **Exhaust gas purifying device**
Abgasreinigungsvorrichtung
Dispositif de purification des gaz d'échappement

(30) Priority: 16.02.2010 JP 2010030840
(43) Date of publication of application: 26.10.2011
(73) Proprietor: NGK Insulators, Ltd., Nagoya-City, Aichi Pref. 467-8530 (JP)
(72) Inventor: Goto, Chika, Nagoya City Aichi-ken, 467-8530 (JP); Yamashita, Masataka, Nagoya City Aichi-ken, 467-8530 (JP); Miyairi, Yukio, Nagoya City Aichi-ken, 467-8530 (JP)
(74) Representative: Paget, Hugh Charles Edward

(56) References cited:
- EP-A1- 1 974 798
- EP-A2- 1 985 352
- WO-A1-98/45026
- US-A1- 2007 077 190

## Description

### BACKGROUND OF THE INVENTION

### Field of the Invention

The present invention relates to an exhaust gas purifying device. More particularly, it relates to an exhaust gas purifying device which can efficiently remove fine particles in an exhaust gas discharged from a direct injection type gasoline engine, has a less increase of pressure drop, and can purify the exhaust gas containing CO, HC and NOx with a high efficiency immediately after the start of the engine.

### Description of the Related Art

From the viewpoints of terrestrial environment protection and resource saving, lowering of fuel expenses of vehicles is demanded. As to a gasoline engine mainly used in a car, direct fuel injection is promoted to improve fuel economy.

Heretofore, in the gasoline engine, a suction port fuel injection system has been employed. Therefore, soot (a particulate matter: PM) is less generated, and any problem hardly occurs. However, a gasoline engine of the direct fuel injection system has a larger amount of the PM as compared with the engine of the suction port fuel injection system and, accordingly, requires a countermeasure so that the generated PM is not discharged to atmospheric air.

On the other hand, as a collecting filter for removing the particulate matter discharged from a diesel engine, a honeycomb structure is used. As the honeycomb structure for use as the particulate matter collecting filter, a plugged honeycomb structure having plugged portions at predetermined positions in both end faces thereof is used (e.g., see Patent Document 1). Here, the plugged honeycomb structure comprises a honeycomb structure portion including porous partition walls arranged to form a plurality of cells which become through channels of a fluid (an exhaust gas and a purified gas) and an outer peripheral wall positioned at an outermost periphery thereof; and plugged portions arranged in 'open frontal areas of predetermined cells in an end face of the honeycomb structure portion on an inlet side of the fluid (the exhaust gas)' and 'open frontal areas of remaining cells in an end face of the honeycomb structure portion on an outlet side of the fluid (the purified gas)' in the honeycomb structure portion. According to such a honeycomb structure, the exhaust gas flows into the cells through the end face of the honeycomb structure on the inlet side of the exhaust gas, the exhaust gas which has flowed into the cells passes through the partition walls, and the exhaust gas (the purified gas) passing through the partition walls is discharged from the honeycomb structure through the end face thereof on the outlet side of the exhaust gas. Moreover, when the exhaust gas passes through the partition walls, the PM contained in the exhaust gas is collected by the partition walls, and the exhaust gas becomes the purified gas.

Consequently, there is suggested a method using the plugged honeycomb structure for use in removing the particulate matter discharged from the diesel engine as described above, when removing the particulate matter discharged from the gasoline engine.

[Patent Document 1] JP-A-2003-254034

The document US 2007/077190 A1 describes a serial connection of two honeycombs, the first one having unplugged and the second having plugged cells.

### SUMMARY OF THE INVENTION

Heretofore, a three way catalyst converter, an NOx adsorber reduction catalyst or the like has been used to treat an exhaust gas discharged from a gasoline engine. Therefore, it is considered that when a plugged honeycomb structure is mounted in an exhaust system, a pressure drop of the exhaust system increases, thereby causing a problem such as decrease of an engine output.

To solve the problem, it is considered that the plugged honeycomb structure having a three way catalyst loaded onto partition walls thereof is replaced with the above three way catalyst converter, NOx adsorber reduction catalyst or the like. However, when a necessary amount of the three way catalyst is loaded onto the partition walls of the plugged honeycomb structure, a problem occurs that the pressure drop increases owing to pores of partition walls being closed.

Moreover, in the plugged honeycomb structure, the open frontal area of one end of each predetermined cell and the open frontal area of the other end of each remaining cell are plugged with a plugging material, but such plugged portions are formed to increase heat capacity of both the ends of the plugged honeycomb structure. Therefore, there is a problem that much time is required for temperature rise of both the ends during warm-up immediately after the start of the engine. That is, much time is required for reaching the temperature necessary for activating the catalyst loaded onto both the ends, which causes a problem that a purifying ratio deteriorates. Examples of a method of solving the problem that much time is required for the temperature rise supposedly include a method of increasing the amount of the catalyst to be loaded. However, when the amount of the catalyst is increased, the amount of a noble metal as the catalyst to be used is increased, which causes problems such as increase of costs and waste of resources. On the other hand, heat efficiency of the engine is increased for a purpose of improving fuel economy of a car. However, when the heat efficiency of the engine is increased, the temperature of the exhaust gas discharged from the engine lowers, which causes a problem that much time is further required for the temperature rise.

Furthermore, the gasoline engine is different from the diesel engine in the fuel for use, and hence the amount of the PM in the exhaust gas varies as described above. Additionally, the particle diameters, shape and components of the PM in the exhaust gas also vary. Therefore, the gasoline engine is different from the diesel engine also in the optimum constitution (characteristics) of a honeycomb structure for collecting the PM in the exhaust gas.

The present invention has been developed in view of such problems of the conventional technology, and an object thereof is to provide an exhaust gas purifying device which can efficiently remove fine particles in an exhaust gas discharged from a direct injection type gasoline engine, has a less increase of pressure drop, and can purify the exhaust gas containing CO, HC and NOx with a high efficiency immediately after the start of the engine.

According to the present invention, an exhaust gas purifying device is provided as follows.

[1] An exhaust gas purifying device as set out in claim 1.
[2] The exhaust gas purifying device according to the above [1], wherein the amount of the three way catalyst to be loaded per unit volume of the honeycomb catalyst is from 200 to 400 g/L.
[3] The exhaust gas purifying device according to the above [1] or [2], wherein a porosity of the partition walls of the first honeycomb base material is smaller than that of the partition walls of the second honeycomb base material.
[4] The exhaust gas purifying device according to any one of the above [1] to [3], wherein the diameter of the honeycomb catalyst is from 50 to 80% of the diameter of the plugged honeycomb structure.
[5] The exhaust gas purifying device according to any one of the above [1] to [4], wherein in the first honeycomb base material, a thickness of the partition walls is from 50.8 to 101.6 µm, the cell density is from 32 to 186 cells/cm², the porosity of the partition walls is from 20 to 50%, and a value of a ratio of a length L₁ of the first honeycomb base material along the central axis direction with respect to a diameter D₁ of the first inflow side end face is from 0.1 to 0.4.
[6] The exhaust gas purifying device according to any one of the above [1] to [5], wherein in the second honeycomb base material, a thickness of the partition walls is from 127 to 508 µm, the cell density is from 7.7 to 46.5 cells/cm², the porosity of the partition walls is from 35 to 80%, a value of a ratio of a length L₂ of the second honeycomb base material along the central axis direction with respect to a diameter D₂ of the second inflow side end face is from 0.5 to 1.5, and an average pore diameter of the partition walls is from 7 to 40 µm.
[7] The exhaust gas purifying device according to any one of the above [1] to [6], wherein a distance between the honeycomb catalyst and the plugged honeycomb structure is from 1 to 20 mm.

According to an exhaust gas purifying device of the present invention, there is used a plugged honeycomb structure including a second honeycomb base material having porous partition walls and plugged portions arranged to plug open frontal areas of predetermined cells in a second outflow side end face of the second honeycomb base material and open frontal areas of the remaining cells in a second inflow side end face thereof, whereby fine particles in an exhaust gas discharged from a direct injection type gasoline engine can efficiently be removed. Moreover, since a honeycomb catalyst including cells having both opened ends is used, the device has a less increase of pressure drop. Moreover, the honeycomb catalyst is disposed so that the first inflow side end face of the honeycomb catalyst faces an inflow port side of a can member. Therefore, a temperature of the honeycomb catalyst can satisfactorily be raised by heat of the exhaust gas, to purify the exhaust gas containing CO, HC and NOx with a high efficiency immediately after start of the engine.

### BRIEF DESCRIPTION OF THE DRAWINGS

Fig. 1 is an exemplary diagram showing a section of one embodiment of an exhaust gas purifying device of the present invention parallel to a central axis thereof;
Fig. 2 is a plan view schematically showing a first outflow side end face of a honeycomb catalyst constituting the exhaust gas purifying device of the present invention;
Fig. 3 is a perspective view schematically showing the honeycomb catalyst constituting the exhaust gas purifying device of the present invention;
Fig. 4 is a plan view schematically showing a second outflow side end face of a plugged honeycomb structure constituting the exhaust gas purifying device of the present invention; and
Fig. 5 is a perspective view schematically showing the plugged honeycomb structure constituting the exhaust gas purifying device of the present invention.

### DESCRIPTION OF THE PREFERRED EMBODIMENTS

Hereinafter, embodiments of the present invention will be described, but it should be understood that the present invention is not limited to the following embodiments.

### [1] Exhaust Gas Purifying Device:

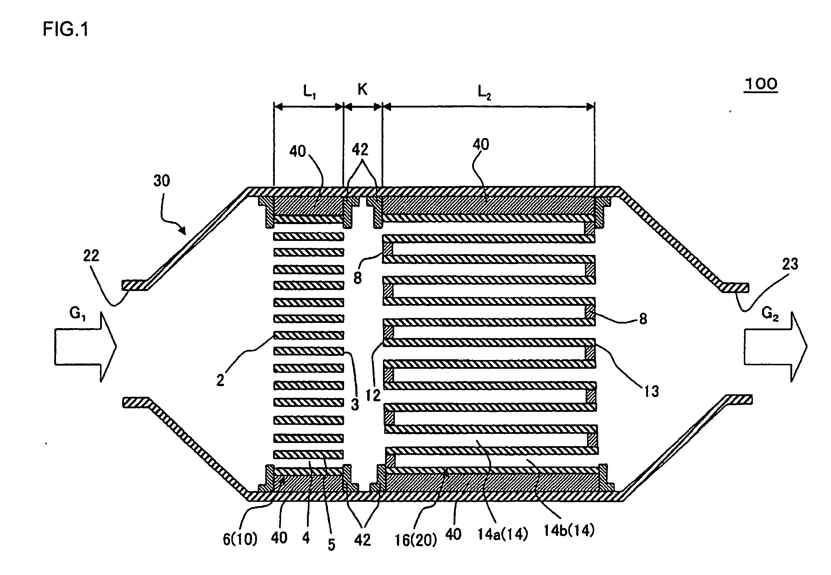

As shown in Fig. 1, an exhaust gas purifying device 100 of the present invention comprises a honeycomb catalyst 10 including a first honeycomb base material 6 having porous partition walls 5 arranged to form a plurality of cells 4 which extend through the first honeycomb base material from a first inflow side end face 2 to a first outflow side end face 3 and become through channels of a fluid, and a three way catalyst loaded onto the first honeycomb base material 6, the cells 4 having both opened ends; a plugged honeycomb structure 20 including a second honeycomb base material 16 having porous partition walls 15 arranged to form a plurality of cells 14 which extend through the second honeycomb base material from a second inflow side end face 12 to a second outflow side end face 13 and become through channels of the fluid, and plugged portions 8 arranged to plug open frontal areas of predetermined cells 14a in the second outflow side end face 13 of the second honeycomb base material 16 and open frontal areas of remaining cells 14b in the second inflow side end face 12 of the second honeycomb base material; and a can member 30 containing the honeycomb catalyst 10 and the plugged honeycomb structure 20 and having an inflow port 22 through which an exhaust gas G₁ flows into the can member and an outflow port 23 through which a purified exhaust gas G₂ flows out of the can member.

Moreover, the honeycomb catalyst 10 is disposed in the can member 30 on an inflow port 22 side thereof so that the first inflow side end face 2 faces the inflow port 22 side of the can member 30, the plugged honeycomb structure 20 is disposed in the can member 30 on an outflow port 23 side thereof so that the second outflow side end face 13 faces the outflow port 23 side of the can member 30. A value of a ratio of a length L₁ of the honeycomb catalyst 10 along a central axis direction with respect to a length L₂ of the plugged honeycomb structure 20 along the central axis direction is from 0.1 to 0.5. Any catalyst is not loaded onto the plugged honeycomb structure 20, or the catalyst is loaded onto the plugged honeycomb structure 20 and the amount of the catalyst to be loaded per unit volume of the plugged honeycomb structure is smaller than the amount of the three way catalyst to be loaded per unit volume of the honeycomb catalyst 10. Furthermore, the cell density of the first honeycomb base material 6 is larger than that of the second honeycomb base material 16. Additionally, an open area ratio in the first inflow side end face 2 of the honeycomb catalyst 10 is larger than that in the second inflow side end face 12 of the plugged honeycomb structure 20, and a diameter of the honeycomb catalyst 10 is equal to or smaller than that of the plugged honeycomb structure 20. Fig. 1 is an exemplary diagram showing a section of the embodiment of the exhaust gas purifying device of the present invention parallel to a central axis thereof.

According to the exhaust gas purifying device 100, there is used the plugged honeycomb structure 20 including the second honeycomb base material 16 having the porous partition walls 15, and the plugged portions 8 arranged to plug the open frontal areas of the predetermined cells 14a in the second outflow side end face 13 of the second honeycomb base material 16 and the open frontal areas of the remaining cells 14b in the second inflow side end face 12, whereby fine particles in an exhaust gas discharged from a direct injection type gasoline engine can efficiently be removed. Moreover, since the honeycomb catalyst 10 including the cells 4 having both opened ends is used, the device has a less increase of pressure drop. Moreover, the honeycomb catalyst 10 is disposed in the can member 30 on the inflow port 22 side so that the first inflow side end face 2 of the honeycomb catalyst faces the inflow port 22 side of the can member 30, and the plugged honeycomb structure 20 is disposed in the can member 30 on the outflow port 23 side so that the second outflow side end face 13 of the plugged honeycomb structure faces the outflow port 23 side of the can member 30. Therefore, a temperature of the honeycomb catalyst 10 can satisfactorily be raised by heat of the exhaust gas. In consequence, the exhaust gas containing CO, HC and NOx can be purified with a high efficiency immediately after start of the engine.

### [1-1] Honeycomb Catalyst:

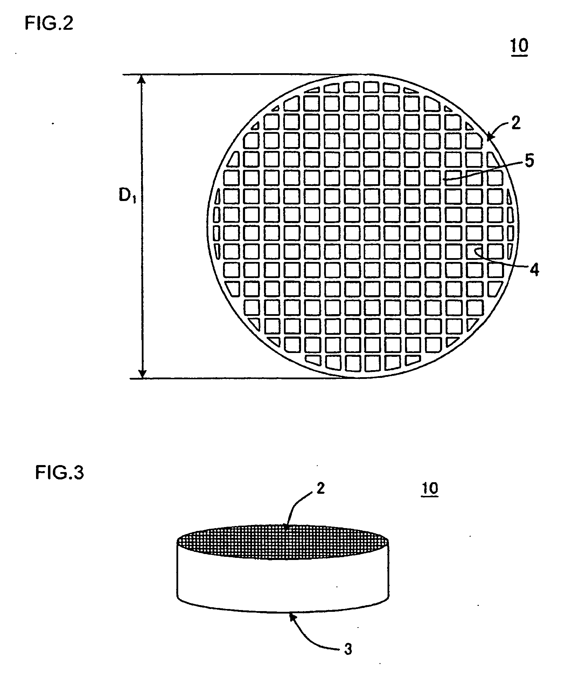

In the honeycomb catalyst 10, as shown in Fig. 1 and Fig. 2, the first honeycomb base material 6 has a honeycomb shape including the porous partition walls 5 arranged to form the plurality of cells 4 which extend through the first honeycomb base material from the first inflow side end face 2 to the first outflow side end face 3 and become the through channels of the fluid. The cells 4 formed in the honeycomb catalyst 10 acquire the through channels of the fluid from the first inflow side end face 2 to the first outflow side end face 3 (any plugged portion is not formed and any cell 4 is not closed). Therefore, even if a large amount of the three way catalyst is loaded onto the partition walls 5 of the honeycomb catalyst 10, the flow of the fluid (the exhaust gas) is not easily disturbed, and the pressure drop increases less. Therefore, the amount of the three way catalyst to be loaded per unit volume can be increased. It is to be noted that the amount of the three way catalyst to be loaded per unit volume of the honeycomb catalyst 10 may be uniform, but the amount of the three way catalyst to be loaded per unit volume of the end of the honeycomb catalyst on the first inflow side end face 2 side is preferably larger than the amount of the three way catalyst to be loaded onto the other portions. On the other hand, if the amount of the three way catalyst to be loaded onto the end of the honeycomb catalyst on the first inflow side end face 2 side is smaller than the amount of the three way catalyst to be loaded onto the other portions, heat generated by a catalyst reaction in the fluid inflow side end of the honeycomb catalyst (the end thereof on the first inflow side end face 2 side) becomes inadequate, which lowers a temperature rise speed. Therefore, much time is required for reaching a catalyst activating temperature, and an adequate exhaust gas purifying performance might not be obtained. When the amount of the three way catalyst to be loaded per unit volume is larger than the amount of the three way catalyst to be loaded onto the other portions, the heat generated by the catalyst reaction increases in the end of the honeycomb catalyst on the first inflow side end face 2 side as compared with the other portions. Therefore, the temperature of a large amount of the three way catalyst can reach the catalyst activating temperature in an early stage after the start of the engine. Fig. 2 is a plan view schematically showing the first inflow side end face 2 of the honeycomb catalyst 10 constituting the exhaust gas purifying device 100 shown in Fig. 1.

As to the end of the honeycomb catalyst on the first inflow.side end face 2 side, a position of the end from the first inflow side end face 2 has a distance from the first inflow side end face 2 preferably in a range of 10 to 60% of the length of the honeycomb catalyst 10 along the central axis direction.

Fig. 3 is a perspective view schematically showing the honeycomb catalyst 10 constituting the exhaust gas purifying device 100 shown in Fig. 1 as an example of the cylindrical honeycomb catalyst 10. Moreover, the outer shape of the honeycomb catalyst 10 is not limited to a cylindrical shape shown in Fig. 3, and examples of the shape include an elliptic cylinder shape, a cylinder shape having a polygonal bottom face such as a quadrangular bottom face, and a cylinder shape having a bottom face with an indeterminate shape.

Moreover, a size, specifically a length L₁ of the honeycomb catalyst 10 along the central axis direction is preferably from 30 to 200 mm.

As described above, the diameter of the honeycomb catalyst 10 needs to be equal to or smaller than that of the plugged honeycomb structure 20, and the diameter of the honeycomb catalyst 10 is preferably smaller than that of the plugged honeycomb structure 20. When the diameter of the honeycomb catalyst 10 is smaller than that of the plugged honeycomb structure 20, the honeycomb catalyst 10 becomes lighter than the plugged honeycomb structure 20 on conditions that the length of the honeycomb catalyst 10 along the central axis direction is equal to or smaller than that of the plugged honeycomb structure 20 along the central axis direction. Therefore, the temperature rise speed becomes high, and the temperature of the honeycomb catalyst 10 easily reaches the catalyst activating temperature in the early stage after the start of the engine. Here, there is a restriction on the increase of the capacity of the can member 30. Therefore, when the honeycomb catalyst 10 is made small, the plugged honeycomb structure 20 can be made large. Moreover, when the plugged honeycomb structure 20 becomes large, fine particles in the exhaust gas can efficiently be removed.

When the diameter of the honeycomb catalyst 10 is smaller than that of the plugged honeycomb structure 20, the diameter of the honeycomb catalyst 10 is preferably from 50 to 80%, further preferably from 55 to 75%, especially preferably from 60 to 70% of the diameter of the plugged honeycomb structure 20. When the diameter is set to the above range, the temperature of the honeycomb catalyst 10 rises at a satisfactory speed by the heat of the exhaust gas. Moreover, if the diameter is less than 50%, the pressure drop might become excessively large. On the other hand, if the diameter exceeds 80%, the temperature of the honeycomb catalyst 10 might not sufficiently rise even by the heat of the exhaust gas (the temperature rise speed might lower). Moreover, when the outer shape of the honeycomb catalyst 10 is, for example, the cylindrical shape, a diameter D₁ (see Fig. 2) of the bottom face of the outer shape is preferably from 80 to 180 mm. When the honeycomb catalyst 10 has a shape other than the cylindrical shape, the area of the bottom face of the shape is preferably in the same range as that of the area of the bottom face of the cylindrical shape.

The thickness of the partition walls 5 is preferably from 50.8 to 101.6 µm, further preferably from 50.8 to 75 µm, especially preferably from 65 to 75 µm. If the thickness is less than 50.8 µm, the strength of the honeycomb catalyst 10 might deteriorate. On the other hand, if the thickness exceeds 101.6 µm, the pressure drop during the passing of the exhaust gas through the cells 4 might become large. The thickness of the partition wall 5 is a value measured by a method of observing the section of the partition wall parallel to the central axis by a microscope.

The cell density of the first honeycomb base material 6 (i.e., the cell density of the section of the first honeycomb base material 6 (the honeycomb catalyst 10) perpendicular to the central axis thereof) needs to be larger than that of the second honeycomb base material 16 as described above. Moreover, an open area ratio in the first inflow side end face 2 of the honeycomb catalyst 10 needs to be larger than that in the second inflow side end face 12 of the plugged honeycomb structure 20 as described above. When the cell density and the open area ratio are larger in this manner, the partition walls 5 of the honeycomb catalyst 10 have a smaller thickness as compared with the partition walls 15 of the plugged honeycomb structure 20. Therefore, when the volume of the honeycomb catalyst 10 is equal to or smaller than that of the plugged honeycomb structure 20, the honeycomb catalyst 10 becomes lighter than the plugged honeycomb structure 20, whereby the honeycomb catalyst 10 easily reaches the catalyst activating temperature in the early stage after the start of the engine.

The cell density of the first honeycomb base material 6 is specifically preferably from 32 to 186 cells/cm², further preferably from 40 to 100 cells/cm², especially preferably from 50 to 60 cells/cm². When the cell density is in the above range, a contact area between the exhaust gas and the honeycomb catalyst 10 increases, and the honeycomb catalyst 10 easily reaches the catalyst activating temperature in the early stage after the start of the engine. If the cell density is less than 32 cells/cm², the strength of the honeycomb catalyst 10 might deteriorate. On the other hand, if the cell density exceeds 186 cells/cm², the pressure drop might become large.

The open area ratio in the first inflow side end face 2 of the honeycomb catalyst 10 is specifically preferably from 75 to 92%, further preferably from 80 to 90%, especially preferably from 85 to 90%. If the open area ratio is less than 75%, a heat capacity of the end of the honeycomb catalyst on the first inflow side end face 2 side becomes excessively large. Therefore, the temperature of the honeycomb catalyst 10 does not sufficiently rise even by the heat of the exhaust gas (the temperature rise speed lowers), and an exhaust gas purifying performance might deteriorate. On the other hand, if the open area ratio exceeds 92%, the strength of the honeycomb catalyst 10 becomes inadequate. Therefore, the honeycomb catalyst might break down, when the honeycomb catalyst is disposed in the can member 30.

In the exhaust gas purifying device 100, the open area ratio in the first inflow side end face 2 of the honeycomb catalyst 10 needs to be larger than that in the second inflow side end face 12 of the plugged honeycomb structure 20. However, in this case, the porosity of the partition wall 5 of the first honeycomb base material 6 is preferably smaller than that of the partition wall 15 of the second honeycomb base material 16. When the porosity of the partition wall 5 is smaller than that of the partition wall 15, the strength of the honeycomb catalyst 10 can be acquired. That is, when the open area ratio in the first inflow side end face 2 of the honeycomb catalyst 10 is larger than that in the second inflow side end face 12 of the plugged honeycomb structure 20, the heat capacity of the honeycomb catalyst 10 becomes smaller than that of the plugged honeycomb structure 20. Therefore, the temperature rise speed of the honeycomb catalyst 10 is higher than that of the plugged honeycomb structure 20. However, the strength of the honeycomb catalyst 10 might not become adequate. Therefore, the porosity of the partition wall 5 is preferably smaller than that of the partition wall 15. Moreover, the temperature of the honeycomb catalyst 10 rises in the early stage, the heat of the exhaust gas can be utilized for raising the temperature of the plugged honeycomb structure 20. That is, the temperature of the plugged honeycomb structure 20 can be raised fast.

Specifically, the porosity of the partition wall 5 of the first honeycomb base material 6 is preferably from 20 to 50%, further preferably from 25 to 38%, especially preferably from 25 to 30%. If the porosity is less than 20%, the pressure drop might increase. On the other hand, if the porosity exceeds 50%, the honeycomb catalyst 10 might become brittle and easily be lost. The porosity of the partition wall 5 is a value measured by a mercury porosimeter.

The value of the ratio of the length L₁ of the first honeycomb base material 6 with respect to the diameter D₁ of the first inflow side end face 2 is preferably from 0.1 to 0.4, further preferably from 0.15 to 0.35, especially preferably from 0.2 to 0.3. If the value is less than 0.1, suspension time of the exhaust gas in the first honeycomb base material 6 (the honeycomb catalyst 10) shortens. Therefore, the temperature of the honeycomb catalyst 10 does not sufficiently rise by the heat of the exhaust gas, and the purifying performance immediately after the start of the engine might not sufficiently be obtained. On the other hand, if the value exceeds 0.4, the honeycomb catalyst 10 becomes excessively heavy (the density becomes excessively large). Consequently, the temperature does not sufficiently rise by the heat of the exhaust gas, and the exhaust gas purifying performance might not sufficiently be obtained.

The average pore diameter of the partition walls 5 is preferably from 5 to 30 µm, further preferably from 10 to 25 µm. When the average pore diameter is less than 5 µm and the three way catalyst is loaded onto the partition wall 5 to form a catalyst layer, close contact properties between this catalyst layer and the surface of the partition wall 5 is not sufficiently obtained. In consequence, the catalyst layer might peel. On the other hand, if the average pore diameter exceeds 30 µm, the honeycomb catalyst 10 might become brittle and easily be lost. The average pore diameter of the partition walls 5 is a value measured by the mercury porosimeter.

There is not any special restriction on the shape of the cell 4 of the first honeycomb base material 6, but the section of the cell perpendicular to the central axis preferably has a polygonal shape such as a triangular, quadrangular, pentangular, hexagonal or octagonal shape, a circular shape, an elliptic shape or another indeterminate shape. A combination of the quadrangular shape and octagonal shape is also a preferable configuration.

Moreover, all the cells of the first honeycomb base material 6 may have the same hydraulic diameter, or the opened cells 4 in the first inflow side end face 2 may have a hydraulic diameter different from that of the opened cells 4 in the first outflow side end face 3. Both of the above cases are preferable, but the different hydraulic diameters are more preferable. Specifically, when the exhaust gas of the gasoline engine is purified, to decrease the pressure drop, the hydraulic diameter of the opened cell 4 in the first outflow side end face 3 is preferably larger than that of the opened cell 4 in the first inflow side end face 2. The hydraulic diameter of the opened cell 4 in the first inflow side end face 2 is preferably from 20 to 45% of the hydraulic diameter of the opened cell 4 in the first outflow side end face 3. In the present specification, 'the cell hydraulic diameter' is a value calculated by '4 x (sectional area)/(peripheral length)'. Here, 'the sectional area' is the area of the section of the cell perpendicular to a cell extending direction, and 'the peripheral length' is 'the length of the outer periphery of each cell' in the section of the cell perpendicular to the cell extending direction.

The first honeycomb base material 6 (the partition wall 5) contains a ceramic material as a main component. Specifically, the material of the partition wall 5 is preferably at least one selected from the group consisting of silicon carbide, a silicon-silicon carbide based composite material, cordierite, mullite, alumina, spinel, a silicon carbide-cordierite based composite material, lithium aluminum silicate and aluminum titanate. Among these materials, cordierite is preferable because this material has a small thermal expansion coefficient and an excellent resistance to thermal shock. Moreover, 'contains the ceramic material as the main component' means that the whole material contains 90 mass% or more of the ceramic material.

Moreover, the honeycomb catalyst 10 may have an outer peripheral wall positioned at the outermost periphery thereof. It is to be noted that the outer peripheral wall is preferably an integrally formed wall formed integrally with a porous base material during forming, but a cement coat wall made of a ceramic cement material or the like and having a predetermined shape obtained by grinding the outer periphery of the porous base material after the forming is also a preferable configuration. In case of the integrally formed wall, the material of the outer peripheral wall is preferably the same as that of the honeycomb catalyst 10. Moreover, when the outer peripheral wall is the cement coat wall, examples of the material of the cement coat wall include a material obtained by adding a flux component such as glass to a co-base. Furthermore, the thickness of the outer peripheral wall is preferably from 0.5 to 1.5 mm.

### [1-1-1] Ternary Catalyst:

The three way catalyst is a catalyst for mainly removing hydrocarbon (HC), carbon monoxide (CO) and nitrogen oxide (NOx). Examples of the three way catalyst is a catalyst containing platinum (Pt), palladium (Pd) or rhodium (Rh). This three way catalyst oxidizes hydrocarbon to water and carbon dioxide, oxidizes carbon monoxide to carbon dioxide or reduces nitrogen oxide to nitrogen, to purify the exhaust gas.

The amount of the three way catalyst to be loaded per unit volume of the honeycomb catalyst 10 is preferably from 200 to 400 g/L, further preferably from 200 to 300 g/L and especially preferably from 200 to 250 g/L. If the load amount is less than 200 g/L, the amount of the three way catalyst is excessively small. Therefore, the amount of the heat generated by the catalyst reaction becomes inadequate, and the temperature might not easily rise to the activating temperature of the three way catalyst in the early stage immediately after the start of the engine. If the amount exceeds 400 g/L, the load amount per unit volume is excessively large, and the through channels of the cells 4 having both opened ends are narrowed, which might increase the pressure drop.

### [1-2] Plugged Honeycomb Structure:

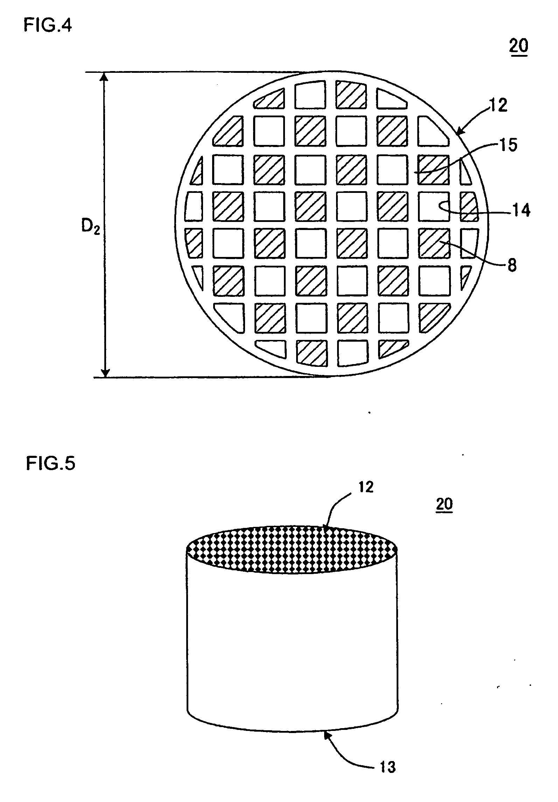

In the plugged honeycomb structure 20, as shown in Fig. 1 and Fig. 4, the second honeycomb base material 16 has a honeycomb shape including the porous partition walls 15 arranged to form the plurality of cells 14 which become the fluid through channels extending from the second inflow side end face 12 to the second outflow side end face 13. Fig. 4 is a plan view schematically showing the second inflow side end face 12 of the plugged honeycomb structure 20 constituting the exhaust gas purifying device 100 shown in Fig. 1.

Fig. 5 is a perspective view schematically showing the plugged honeycomb structure 20 constituting the exhaust gas purifying device 100 shown in Fig. 1 as an example of the cylindrical plugged honeycomb structure 20. The outer shape of the plugged honeycomb structure 20 is not limited to a cylindrical shape shown in Fig. 5, and examples of the shape include an elliptic cylinder shape, a cylinder shape having a polygonal bottom face such as a quadrangular bottom face, and a cylinder shape having a bottom face with an indeterminate shape.

Moreover, the plugged honeycomb structure 20 preferably has a size, specifically a length L₂ of 50 to 200 mm along the central axis direction. Furthermore, when the outer shape of the plugged honeycomb structure 20 is, for example, a cylindrical shape, a diameter D₂ (see Fig. 4) of the bottom face of the structure is preferably from 80 to 180 mm. When the plugged honeycomb structure 20 has a shape other than the cylindrical shape, the area of the bottom face of the structure is preferably in the same range as that of the area of the bottom face of the cylindrical structure.

The thickness of the partition walls 15 is preferably from 127 to 508 µm, further preferably from 200 to 400 µm, especially preferably from 250 to 350 µm. If the thickness is less than 127 µm, the strength of the plugged honeycomb structure 20 might deteriorate. On the other hand, if the thickness exceeds 508 µm, the pressure drop during the passing of the exhaust gas through the cells 14 increases sometimes. The thickness of the partition wall 15 is a value measured by a method of observing the section of the partition wall parallel to the central axis by the microscope.

The cell density of the second honeycomb base material 16 (the plugged honeycomb structure 20) (i.e., the cell density of the section of the second honeycomb base material 16 perpendicular to the central axis thereof) is preferably from 7.7 to 46.5 cells/cm², further preferably from 10 to 40 cells/cm², especially preferably from 15 to 25 cells/cm². If the cell density is less than 7.7 cells/cm², the strength of the plugged honeycomb structure 20 might deteriorate. On the other hand, if the cell density exceeds 46.5 cells/cm², the pressure drop might increase.

The porosity of the partition wall 15 of the second honeycomb base material 16 is preferably from 35 to 80%, further preferably from 38 to 65%, especially preferably from 45 to 65%. If the porosity is less than 35%, the pressure drop might increase. On the other hand, if the porosity exceeds 80%, the plugged honeycomb structure 20 might become brittle and easily be lost. The porosity of the partition wall 15 is a value measured by the mercury porosimeter.

The value of the ratio of the length L₂ of the second honeycomb base material 16 with respect to the diameter D₂ of the second inflow side end face 12 is preferably from 0.5 to 1.5, further preferably from 0.8 to 1.5, especially preferably from 1.1 to 1.3. If the value is less than 0.5, the length of the second honeycomb base material 16 along the central axis direction excessively shortens. Therefore, a filterable area becomes small, a collecting efficiency deteriorates, and the pressure drop might increase. On the other hand, if the value exceeds 1.5, the length of the second honeycomb base material 16 along the central axis direction becomes excessively large. Consequently, the pressure drop in the cell through channels increases, and hence the pressure drop of the whole plugged honeycomb structure 20 might become excessively large.

The average pore diameter of the partition walls 15 is preferably from 7 to 40 µm, further preferably from 8 to 35 µm. If the average pore diameter is less than 7 µm, the pressure drop might increase even in a case where a particulate matter is less deposited. On the other hand, if the average pore diameter exceeds 40 µm, the plugged honeycomb structure 20 becomes brittle and is easily lost sometimes, and a particulate matter collecting performance deteriorates sometimes. The average pore diameter of the partition walls 15 is a value measured by the mercury porosimeter.

There is not any special restriction on the shape of the cell 14 of the second honeycomb base material 16, but the section of the cell perpendicular to the central axis preferably has a polygonal shape such as a triangular, quadrangular, pentangular, hexagonal or octagonal shape, a circular shape, an elliptic shape or another indeterminate shape. A combination of the quadrangular shape and octagonal shape is also a preferable configuration. Furthermore, in the sections of the cells 14 perpendicular to the cell extending direction, all the cells preferably have the same sectional area, but the sectional area of the remaining cell 14b having the plugged portion 8 on the second inflow side end face 12 side (the sectional area of the section of the cell perpendicular to the extending direction of the cells 14) is smaller than the sectional area of the predetermined cell 14a having the plugged portion 8 on the second outflow side end face 13 side (the sectional area of the section of the cell perpendicular to the extending direction of the cells 14) in another preferable configuration. In such a configuration, the increase of the pressure drop during the collecting of the particulate matter in the exhaust gas can be suppressed.

Moreover, all the cells of the second honeycomb base material 16 may have the same hydraulic diameter, or the opened cells 14 in the second inflow side end face 12 may have a hydraulic diameter different from that of the opened cells 14 in the second outflow side end face 13. The hydraulic diameters are preferably different from each other. Specifically, when the exhaust gas of the gasoline engine is purified, to decrease the pressure drop, the hydraulic diameter of the opened cell 14 in the second outflow side end face 13 is preferably larger than that of the opened cell 14 in the second inflow side end face 12. The hydraulic diameter of the opened cell 14 in the second inflow side end face 12 is preferably from 20 to 45% of the hydraulic diameter of the opened cell 14 in the second outflow side end face 13.

The second honeycomb base material 16 (the partition wall 15) contains a ceramic material as a main component. Specifically, the material of the partition wall 15 is preferably at least one selected from the group consisting of silicon carbide, a silicon-silicon carbide based composite material, cordierite, mullite, alumina, spinel, a silicon carbide-cordierite based composite material, lithium aluminum silicate and aluminum titanate. Among these materials, cordierite is preferable because this material has a small thermal expansion coefficient and an excellent resistance to thermal shock. Moreover, 'contains the ceramic material as the main component' means that the whole material contains 90 mass% or more of the ceramic material.

Moreover, the plugged honeycomb structure 20 may have an outer peripheral wall positioned at the outermost periphery thereof. It is to be noted that the outer peripheral wall is preferably an integrally formed wall formed integrally with a porous base material during forming, but a cement coat wall made of a ceramic cement material or the like and having a predetermined shape obtained by grinding the outer periphery of the porous base material after the forming is also a preferable configuration. In case of the integrally formed wall, the material of the outer peripheral wall is preferably the same as that of the plugged honeycomb structure 20. Moreover, when the outer peripheral wall is the cement coat wall, examples of the material of the cement coat wall include a material obtained by adding a flux component such as glass to a co-base. Furthermore, the thickness of the outer peripheral wall is preferably from 0.5 to 1.5 mm.

### [1-2-1] Catalyst:

The plugged honeycomb structure 20 may be loaded with a catalyst or does not have to be loaded with any catalyst. When the catalyst is loaded, the amount of the catalyst to be loaded per unit volume needs to be smaller than the amount of the three way catalyst to be loaded per unit volume of the partition wall 5 of the honeycomb catalyst 10. The amount of the catalyst to be loaded per unit volume is adjusted in this manner, whereby the amount of the heat generated by the catalyst reaction can be increased. That is, when the minimum amount of the catalyst (including the three way catalyst) necessary for purifying the exhaust gas is used, the catalyst (including the three way catalyst) can uniformly be loaded onto the plugged honeycomb structure 20 and the honeycomb catalyst 10. However, when the ratio of the three way catalyst to be loaded onto the partition walls 5 of the honeycomb catalyst 10 is increased, the amount of the heat generated by the catalyst reaction increases, which increases the temperature rise speed of the honeycomb catalyst 10. In consequence, the catalyst (including the three way catalyst) easily reaches the activating temperature in the early stage after the start of the engine, i.e., in a short time immediately after the start of an engine operation. Furthermore, the heat of the exhaust gas having the raised temperature in the honeycomb catalyst 10 can be utilized for raising the temperature of the plugged honeycomb structure 20.

Specifically, the amount of the catalyst to be loaded per unit volume of the plugged honeycomb structure 20 is preferably 160 g/L or less, further preferably from 10 to 120 g/L, especially preferably from 20 to 100 g/L. If the load amount exceeds 160 g/L, pores formed in the partition walls 5 are closed with the catalyst, which might excessively increase the pressure drop.

Examples of the catalyst include the three way catalyst, an oxidizing catalyst, an SCR catalyst for selectively reducing NOx and an NOx adsorber. The oxidizing catalyst contains a noble metal, preferably one or more noble metals selected from the group consisting of Pt, Rh and Pd. The total amount of the noble metals is preferably from 0.17 to 7.07 g per unit volume (1 cm³) of the plugged honeycomb structure 20.

The SCR catalyst for selectively reducing NOx contains at least one selected from the group consisting of metal replacing zeolite, vanadium, titania, tungsten oxide, silver and alumina. Moreover, examples of NOx adsorber include an alkali metal and/or an alkali earth metal. Examples of the alkali metal include K, Na and Li. Examples of the alkali earth metal include Ca. The total amount of K, Na, Li and Ca is preferably 5 g or more per unit volume (1 cm³) of the plugged honeycomb structure.

### [1-2-2] Plugged Portion:

The plugged portions 8 disposed in the plugged honeycomb structure 20 can be prepared from a plugging material containing a ceramic material, water or alcohol, and an organic binder, and the ceramic material is preferably the same as the ceramic material used as the raw material of the second honeycomb base material 16 (the partition wall 15 of the second honeycomb base material 16). In consequence, during firing, the plugged portions 8 firmly combine with the partition walls 15.

The plugged portions 8 are preferably arranged to alternately plug the open frontal area of the predetermined cell 14a of the second honeycomb base material 16 in the second outflow side end face 13 and the open frontal area of the remaining cell 14b in the second inflow side end face 12 so that both the end faces have a checkered pattern.

The depth of the plugged portion 8 is preferably from 1 to 5 mm, further preferably from 1 to 3 mm. If the depth is smaller than 1 mm, the strength of the plugged portions 8 might deteriorate. On the other hand, if the depth is larger than 5 mm, the area of the partition wall 15 for collecting the PM might decrease. Here, the depth of the plugged portion 8 means the length of the plugged portion 8 along the extending direction of the cells 14.

### [1-3] Can Member:

There is not any special restriction on the can member 30, and there may be used a conventional can member in which a ceramic honeycomb filter for purifying an exhaust gas of a car or the like is disposed. Examples of the material of the can member 30 include a metal such as a ferrite-based stainless steel. The can member 30 preferably has such a size that the honeycomb catalyst 10 and plugged honeycomb structure 20 including a cushion material 40 wound around them can be pressed into the can member. The can member 30 having a length of about 100 to 300 mm is preferably used.

When the length L₂ of the plugged honeycomb structure 20 along the central axis direction is from 50 to 200 mm, the value of the ratio of the length L₁ of the honeycomb catalyst 10 along the central axis direction with respect to the length L₂ of the plugged honeycomb structure 20 along the central axis direction needs to be from 0.1 to 0.5, preferably from 0.2 to 0.4, further preferably from 0.2 to 0.3. When the value is in the above range, the honeycomb catalyst 10 is sufficiently shorter than the plugged honeycomb structure 20. Consequently, the temperature of the honeycomb catalyst satisfactorily rises immediately after the start of the engine. Therefore, the temperature reaches the catalyst activating temperature in a short time. Moreover, there is not any special restriction on the capacity of the can member 30. However, the honeycomb catalyst 10 can be shortened to increase the capacity of the plugged honeycomb structure 20, and the area of the partition wall 15 can sufficiently be acquired. Therefore, the increase of the pressure drop can be prevented. If the value is less than 0.1, the ratio of the length of the honeycomb catalyst 10 along the central axis direction decreases, but the honeycomb catalyst has an excellent exhaust gas purifying performance as compared with the plugged honeycomb structure 20. Therefore, the exhaust gas purifying efficiency lowers. On the other hand, if the value exceeds 0.5, the filtering area necessary for collecting the particulate matter becomes inadequate, and hence the PM collecting efficiency lowers.

Moreover, the honeycomb catalyst 10 and the plugged honeycomb structure 20 are preferably arranged with a space being left therebetween, to prevent the honeycomb catalyst and the plugged honeycomb structure from being broken down by mutual collision owing to vibration or the like during an operation when the honeycomb catalyst and plugged honeycomb structure are mounted on a car or the like. A distance K between the honeycomb catalyst 10 and the plugged honeycomb structure 20 is preferably from 1 to 20 mm, further preferably from 5 to 10 mm. If the distance is less than 1 mm, the honeycomb catalyst and plugged honeycomb structure might break down by the mutual collision owing to the vibration or the like during the operation when the honeycomb catalyst and plugged honeycomb structure are mounted on the car or the like. On the other hand, if the distance exceeds 20 mm, the space between the honeycomb catalyst 10 and the plugged honeycomb structure 20 enlarges, which increases a contact area of the exhaust gas and the inner surface of the can member 30. Therefore, since the exhaust gas comes in contact with the inner surface of the can member 30, the temperature of the exhaust gas noticeably lowers, and the exhaust gas purifying efficiency might lower.

Examples of a method of arranging the honeycomb catalyst 10 and the plugged honeycomb structure 20 with the space therebetween include a method of disposing partition plates 42 and the like between them as shown in Fig. 1. Examples of the material of the partition plates 42 include a metal such as a stainless steel.

Moreover, the exhaust gas purifying device 100 shown in Fig. 1 is disposed in the can member 30 in a state where the outer peripheries of the honeycomb catalyst 10 and plugged honeycomb structure 20 are covered with the cushion material 40, respectively. The cushion material 40 prevents the honeycomb catalyst 10 and the plugged honeycomb structure 20 from being broken down. It is to be noted that the honeycomb catalyst 10 and the plugged honeycomb structure 20 are preferably disposed in the can member 30 while an external pressure is applied to the honeycomb catalyst and the plugged honeycomb structure via the cushion material 40. The honeycomb catalyst 10 and plugged honeycomb structure 20 disposed in such a state can be prevented from moving in the can member 30, and can be stabilized in the can member 30. As the cushion material 40, a mat made of a ceramic fiber or the like may be used.

### [2] Manufacturing Method of Exhaust Gas Purifying Device:

Next, a manufacturing method of the exhaust gas purifying device of the present invention will be described. There is not any special restriction on the manufacturing method of the exhaust gas purifying device of the present invention, but examples of the method include a method as follows.

The manufacturing method comprises a honeycomb catalyst forming step of allowing a catalyst slurry containing a three way catalyst to flow into a plurality of cells from a first inflow side end face side of a first honeycomb base material obtained by firing a formed first honeycomb article having porous partition walls arranged to form the plurality of cells which become fluid through channels extending from a first inflow side end face to a first outflow side end face, to coat the surfaces of the partition walls of the plurality of cells with the catalyst slurry (loading the three way catalyst), thereby forming a honeycomb catalyst; a plugged honeycomb structure forming step of plugging open frontal areas of predetermined cells in one end face of a formed second honeycomb article having porous partition walls arranged to form a plurality of cells which become fluid through channels extending from a second inflow side end face to a second outflow side end face and open frontal areas of the remaining cells in the other end face of the article and then firing the article to form a plugged honeycomb structure comprising a second honeycomb base material and plugged portions arranged in open frontal areas of predetermined cells in the second inflow side end face of the second honeycomb base material and open frontal areas of the remaining cells in the second outflow side end face; and an assembling step of disposing the honeycomb catalyst in a can member on an inflow port side thereof, the can member having an inflow port through which an exhaust gas flows into the can member and an outflow port through which the purified exhaust gas flows out of the can member, so that the first inflow side end face of the honeycomb catalyst faces a can member inflow port side, and disposing the plugged honeycomb structure in the can member on an outflow port side thereof so that the second outflow side end face of the plugged honeycomb structure faces a can member outflow port side, to contain the honeycomb catalyst and the plugged honeycomb structure in the can member. As to the honeycomb catalyst formed in the honeycomb catalyst forming step, a value of a ratio of a length of the honeycomb catalyst along a central axis direction with respect to a length of the plugged honeycomb structure along the central axis direction is from 0.1 to 0.5. A cell density of the first honeycomb base material constituting the honeycomb catalyst is larger than that of the second honeycomb base material constituting the plugged honeycomb structure. An open area ratio in the first inflow side end face of the honeycomb catalyst is larger than that in the second inflow side end face of the plugged honeycomb structure. A diameter of the honeycomb catalyst is equal to that of the plugged honeycomb structure or smaller than that of the plugged honeycomb structure. As to the plugged honeycomb structure formed in the plugged honeycomb structure forming step, any catalyst is not loaded, or the catalyst is loaded and the amount of the catalyst to be loaded per unit volume of the plugged honeycomb structure is smaller than the amount of the three way catalyst to be loaded per unit volume of the honeycomb catalyst. The exhaust gas purifying device of the present invention can be manufactured by the above steps.

### [2-1] Honeycomb Catalyst Forming Step:

The first honeycomb base material for use in the honeycomb catalyst forming step can be prepared as follows. First, a forming material is kneaded to form a kneaded clay. Next, the obtained kneaded clay is extrusion-formed in a honeycomb shape, to obtain the formed first honeycomb article. Next, the resultant formed first honeycomb article can be fired to obtain the first honeycomb base material.

The forming material is preferably obtained by adding a dispersion medium and an additive to a ceramic material, and examples of the additive include an organic binder, a pore former and a surfactant. Examples of the dispersion medium include water.

The ceramic material is preferably at least one selected from the group consisting of silicon carbide, a silicon-silicon carbide based composite material, a cordierite forming material, mullite, alumina, spinel, a silicon carbide-cordierite based composite material, lithium aluminum silicate and aluminum titanate. Among these materials, the cordierite forming material is preferable, because the material has a small thermal expansion coefficient and an excellent resistance to thermal shock. The content of the ceramic material is preferably from 80 to 95 mass% with respect to the whole forming material.

Examples of the organic binder include methyl cellulose, hydroxypropoxyl cellulose, hydroxyethyl cellulose, carboxymethyl cellulose, and polyvinyl alcohol. Among these materials, it is preferable to use a combination of methyl cellulose and hydroxypropoxyl cellulose. The content of the binder is preferably from 1 to 10 mass% of the whole forming material. These materials may be used alone or as a combination of two or more of them.

There is not any special restriction on the pore former as long as pores are made after the firing, and examples of the pore former include starch, resin balloon, water absorbing resin, and silica gel. The content of the pore former is preferably from 0 to 20 mass% of the whole forming material. These materials may be used alone or as a combination of two or more of them.

As the surfactant, ethylene glycol, dextrine, fatty acid soap, polyalcohol or the like may be used. These materials may be used alone or as a combination of two or more of them. The content of the surfactant is preferably from 0.1 to 5 mass% of the whole forming material.

The content of the dispersion medium is preferably from 0.1 to 5 mass% of the whole forming material.

The particle diameters of the ceramic material (aggregate particles) for use, the amount of the ceramic material to be blended, the particle diameters of the pore former to be added, and the amount of the pore former to be blended can be regulated to obtain a porous base material having desirable porosity and average pore diameter.

There is not any special restriction on a method of kneading the forming material to form the kneaded clay, and examples of the method include a method using a kneader, a vacuum clay kneader or the like. The extrusion forming may be performed by using a die having desirable cell shape, partition wall thickness and cell density. As the material of the die, a hard metal which does not easily wear is preferable.

A firing temperature can appropriately be determined in accordance with the material of the formed first honeycomb article. When the material of the formed first honeycomb article is, for example, cordierite, the firing temperature is preferably from 1380 to 1450°C, further preferably from 1400 to 1440°C. Moreover, firing time is preferably from about 3 to 10 hours.

It is to be noted that the formed first honeycomb article may be dried before fired. There is not any special restriction on a drying method, and examples of the method include hot air drying, microwave drying, dielectric drying, reduced pressure drying, vacuum drying and freeze drying. Among these methods, it is preferable to perform the dielectric drying, microwave drying or hot air drying alone or as a combination. Furthermore, as drying conditions, a drying temperature of 30 to 150°C and drying time of one minute to two hours are preferably set.

Next, there is not any special restriction on a method of coating the surface of the partition wall of each cell with the catalyst slurry (loading the three way catalyst), and a known coating method may be used. For example, first the catalyst slurry containing the three way catalyst is prepared. Afterward, the catalyst slurry is allowed to flow into the cells by dipping or suction. The whole surface of the partition wall of each cell is preferably coated with this catalyst slurry. Subsequently, the catalyst slurry is allowed to flow into the cells, and then a surplus slurry is blown off by compressed air. Afterward, the catalyst slurry is dried and baked, so that the honeycomb catalyst including the three way catalyst loaded onto the surfaces of the partition walls of the cells can be obtained. As the drying conditions, a temperature of 80 to 150°C and time of 1 to 6 hours are preferably set. Moreover, as baking conditions, a temperature of 450 to 700°C and time of 0.5 to 6 hours are preferably set. It is to be noted that examples of a component other than the catalyst contained in the catalyst slurry include alumina.

### [2-2] Plugged Honeycomb Structure Forming Step:

The formed second honeycomb article for use in the plugged honeycomb structure forming step can be prepared as follows. The kneaded clay is extrusion-formed into a honeycomb shape so as to satisfy conditions as follows, to obtain the formed second honeycomb article.

During the extrusion forming in this step, the kneaded clay is extruded from the die so that the value of the ratio of the length of the honeycomb catalyst along the central axis direction with respect to the length of the plugged honeycomb structure along the central axis direction is from 0.1 to 0.5, and the kneaded clay is cut. Moreover, the die is used so that the cell density of the first honeycomb base material of the honeycomb catalyst is larger than that of the second honeycomb base material of the plugged honeycomb structure, the open area ratio in the first inflow side end face of the honeycomb catalyst is larger than that in the second inflow side end face of the plugged honeycomb structure, and the diameter of the honeycomb catalyst is equal to or smaller than that of the plugged honeycomb structure.

Examples of a method of plugging the open frontal areas of the cells of the formed second honeycomb article include a method of charging a plugging material into the open frontal areas of the cells. In the method of charging the plugging material, specifically, a mask is applied to one end face of the formed second honeycomb article so as to close the open frontal areas of the predetermined cells. Here, there is not any special restriction on a method of applying the mask, but in a preferable method, the mask is preferably applied so as to alternately plug the open frontal areas of the predetermined cells in the second outflow side end face of the second honeycomb base material and the open frontal areas of the remaining cells in the second inflow side end face so that both the end faces have a checked pattern. Moreover, the slurried plugging material containing a ceramic material, water or alcohol and an organic binder is beforehand stored in a storage container. The ceramic material is preferably the same as the ceramic material used as the raw material of the formed second honeycomb article. The content of the ceramic material is preferably from 70 to 90 mass% of the whole plugging material. Moreover, the content of water or alcohol is preferably from 10 to 30 mass% of the whole plugging material, and the content of the organic binder is preferably from 0.1 to 2.0 mass% of the whole plugging material. Examples of the organic binder include hydroxypropoxyl methyl cellulose and methyl cellulose. Subsequently, after immersing, into the storage container, the end of the article to which the mask is applied, the plugging material is charged into the open frontal areas of the cells to which any mask is not applied, thereby forming the plugged portions. The viscosity of the plugging material is preferably from 600 to 1200 Pa·s. It is to be noted that the viscosity of the plugging material is a value measured by a rotary viscosity meter at a temperature of 30°C and with a rotation speed of 30 rpm.

Afterward, the mask is applied to the other end face of the formed second honeycomb article so as to close the open frontal areas of the remaining cells. Subsequently, after immersing the other end face having the applied mask into the storage container in which the slurried plugging material is stored, the plugging material is charged into the open frontal areas of the cells to which any mask is not applied, thereby forming the plugged portions. In consequence, it is possible to obtain the formed plugged honeycomb article comprising the plugged portions arranged in the open frontal areas of the predetermined cells in the one end face of the formed second honeycomb article and the open frontal areas of the remaining cells in the other end face thereof.

The firing temperature during the firing of the formed plugged honeycomb article may appropriately be determined in accordance with the material of the formed plugged honeycomb article. When the material of the formed plugged honeycomb article is cordierite, the firing temperature is preferably from 1380 to 1450°C, further preferably from 1400 to 1440°C. Moreover, the firing time is preferably from about 3 to 10 hours.

It is to be noted that the formed plugged honeycomb article may be dried before fired. There is not any special restriction on the drying method, and examples of the method include hot air drying, microwave drying, dielectric drying, reduced pressure drying, vacuum drying and freeze drying. Among these methods, it is preferable to perform the dielectric drying, microwave drying or hot air drying alone or as a combination. Furthermore, as the drying conditions, a drying temperature of 30 to 150°C and drying time of one minute to two hours are preferably set.

It is to be noted that before forming the plugged portions in the formed second honeycomb article, the formed second honeycomb article is fired to obtain a fired honeycomb article. After forming the plugged portions in the open frontal areas of the predetermined cells in the one end face of the obtained fired honeycomb article and the open frontal areas of the remaining cells in the other end face thereof, the article is further fired, whereby the plugged honeycomb structure can be obtained.

It is to be noted that when the catalyst is loaded onto the plugged honeycomb structure (the plugged honeycomb catalyst), this plugged honeycomb catalyst can be obtained by coating the obtained plugged honeycomb structure with the catalyst slurry (loading the catalyst) by a known method. In the method of coating the structure with the catalyst slurry, for example, first the catalyst slurry containing the three way catalyst is prepared. Afterward, the prepared catalyst slurry is allowed to flow into the cells by dipping or suction. The whole surfaces of the partition walls of the cells are preferably coated with the catalyst slurry. Subsequently, after allowing the catalyst slurry to flow into the cells, the surplus slurry is blown off by compressed air. Afterward, the catalyst slurry can be dried and baked to obtain the plugged honeycomb catalyst including the catalyst loaded onto the surfaces of the partition walls of the cells. As the drying conditions, a temperature of 80 to 150°C and time of 1 to 6 hours are preferably set. Moreover, as baking conditions, a temperature of 450 to 700°C and time of 0.5 to 6 hours are preferably set. It is to be noted that examples of a component other than the catalyst contained in the catalyst slurry include alumina.

### [2-3] Assembling Step:

In the assembling step, after covering the outer peripheries of the honeycomb catalyst and plugged honeycomb structure with the cushion material, respectively, the honeycomb catalyst and plugged honeycomb structure covered with the cushion material are disposed in the can member, respectively. At this time, the honeycomb catalyst and plugged honeycomb structure preferably having a compressed state are disposed in the can member. Examples of the cushion material include a mat made of a ceramic fiber. In consequence, the honeycomb catalyst and the plugged honeycomb structure can be prevented from moving in the can member.

As the can member, a heretofore known can member may be used. The can member may be prepared by, for example, pressing and welding a plate material made of ferrite based stainless steel. Specifically, the diameter of the inflow port of the can member is preferably from 30 to 80 mm, and the diameter of the outflow port is preferably from 30 to 80 mm.

### [Examples]

Hereinafter, the present invention will specifically be described with respect to examples, but the present invention is not limited to these examples.

### (Example 1)

### [Preparation of Honeycomb Catalyst] (Honeycomb Catalyst Forming Step)

First, as a cordierite forming material, alumina, aluminum hydroxide, kaoline, talc and silica were used, and 35 parts by mass of a dispersion medium, 6 parts by mass of an organic binder and 0.5 part by mass of a dispersant were added to 100 parts by mass of the cordierite forming material, respectively, mixed and kneaded to prepare a kneaded clay. As the dispersion medium, water was used, as the organic binder, hydroxypropyl methyl cellulose was used, and as the dispersant, ethylene glycol was used.

Next, the kneaded clay was extruded by using a predetermined die, to form a formed honeycomb article having a quadrangular cell shape and entirely having a columnar (cylindrical) shape. Subsequently, the formed honeycomb article was dried by a microwave drier, and further completely dried by a hot air drier, and both end faces of the formed honeycomb article were cut to obtain a predetermined dimension. Afterward, the formed honeycomb article was dried by the hot air drier, and further fired at 1410 to 1440°C for five hours, to obtain the dried honeycomb article.

Next, mixed particles (a specific surface area of 50 m²/g) of γAl₂O₃ having an average particle diameter of 100 µm and CeO₂ having an average particle diameter of 100 µm were wet-ground by a ball mill to obtain ground particles having an average particle diameter of 5 µm. The obtained ground particles were immersed into a solution containing Pt and Rh to load Pt and Rh into pores of the ground particles. Subsequently, acetic acid and water were added to the ground particles including loaded Pt and Rh to obtain a coating slurry. The end of the prepared dried honeycomb article on an inflow side thereof was immersed into the obtained coating slurry. Afterward, while the end of the article on the inflow side was immersed, the coating slurry was vacuum-sucked through the end face of the dried honeycomb article on an outflow side thereof, whereby the partition walls of the dried honeycomb article were coated with the coating slurry to form a catalyst layer. Afterward, the article was dried and fired at 600°C for 3 hours, to prepare a honeycomb catalyst.

The prepared honeycomb catalyst had a diameter of 110 mm, a length of 20 mm along a central axis direction, a ratio value (L₁/D₁) of 0.2 of the length L₁ along the central axis direction with respect to a diameter D₁ of a first inflow side end face of a first honeycomb base material, a cell density of 62.0 cells/cm², a rib thickness (a partition wall thickness) of 0.076 mm, a partition wall porosity of 28.0%, a cell open area ratio of 0.884%, a partition wall average pore diameter of 4 µm, a catalyst load amount of 220 g/L and a noble metal amount of 1 g/L. Results are shown in Table 1.

It is to be noted that the amount of oxide (γAl₂O₃ and CeO₂) to be loaded per unit volume of the honeycomb catalyst was from 200 to 400 g/L, the amount of Pt to be loaded per unit volume of the honeycomb catalyst was from 1 to 2.5 g/L, and the amount of Rh to be loaded per unit volume of the honeycomb catalyst was from 0.2 to 1 g/L. Moreover, the average pore diameter of the catalyst layer was 5 µm, which was equal to the average particle diameter of the ground particles.

On the other hand, in columns of 'the honeycomb catalyst' of Table 1, 'the length' indicates the length of the honeycomb catalyst along the central axis direction, 'L₁/D₁' indicates the value of the ratio of the length L₁ of the honeycomb catalyst along the central axis direction with respect to the diameter D₁ of the inflow side end face of the honeycomb catalyst, 'the rib thickness' indicates the thickness of the partition wall of the first honeycomb base material and 'the pore diameter' indicates the average pore diameter.

### [Preparation of Plugged Honeycomb Structure]

### (Plugged Honeycomb Structure Forming Step)

First, as a cordierite forming material, alumina, aluminum hydroxide, kaoline, talc and silica were used, and 13 parts by mass of a pore former, 35 parts by mass of a dispersion medium, 6 parts by mass of an organic binder and 0.5 part by mass of a dispersant were added to 100 parts by mass of the cordierite forming material, respectively, mixed and kneaded to prepare a kneaded clay. As the dispersion medium, water was used, as the pore former, coke having an average particle diameter of 1 to 10 µm was used, as the organic binder, hydroxypropyl methyl cellulose was used, and as the dispersant, ethylene glycol was used. As the pore former, resin balloon, water absorbing resin or the like may be used. The particle diameters and amount of the pore former can appropriately be controlled to control the pore diameters and porosity of the partition walls.

Next, the kneaded clay was extruded by using a predetermined die, to form a formed honeycomb article having a quadrangular cell shape and entirely having a columnar (cylindrical) shape.

The formed honeycomb article was dried by a microwave drier, and further completely dried by a hot air drier, and both end faces of the formed honeycomb article were cut to obtain a predetermined dimension. Next, a mask was applied to open frontal areas of cells of a part of one end face of the formed honeycomb article. The end of the article including the applied mask was immersed into a plugging slurry containing the cordierite forming material, and then a mask was applied to open frontal areas of the cells each having the plugged one end in the other end of the article. Subsequently, the other end of the article was immersed into the plugging slurry, whereby the plugging slurry was charged into the open frontal areas of predetermined cells to alternately arrange the open frontal areas of the predetermined cells in the one end face and the open frontal areas of the remaining cells in the other end face so that the outflow side end face of the article had a checkered pattern. Afterward, the formed honeycomb article into which the plugging slurry was charged was dried by the hot air drier, and further fired at 1410 to 1440°C for five hours, to prepare the plugged honeycomb structure.

The prepared plugged honeycomb structure had a diameter of 110 mm, a length of 60 mm along the central axis direction, a ratio value (L₂/D₂) of 0.5 of a length L₂ of the structure along the central axis direction with respect to a diameter D₂ of a second inflow side end face of a second honeycomb base material was 0.5, a cell density of 7.8 cells/cm², a rib thickness (a partition wall thickness) of 0.254 mm, a partition wall porosity of 38.0%, a cell open area ratio of 0.864% and a partition wall average pore diameter of 8 µm. Results are shown in Table 1.

It is to be noted that in columns of 'the plugged honeycomb structure' of Table 1, 'the length' indicates the length L₂ of the plugged honeycomb structure along the central axis direction, 'L₂/D₂' indicates the value of the ratio of the length L₂ of the plugged honeycomb structure along the central axis direction with respect to the diameter D₂ of the inflow side end face of the structure, 'the rib thickness' indicates the thickness of each partition wall of the second honeycomb base material, and 'the pore diameter' indicates an average pore diameter.

The prepared honeycomb catalyst and plugged honeycomb structure were used, and disposed in a metal can member having an inflow port and an outflow port and including a pair of partition plates each having a thickness of 2 mm. When the honeycomb catalyst and plugged honeycomb structure were disposed, the outer peripheries thereof were covered with a mat containing a ceramic fiber as a main component, respectively. In this state, the honeycomb catalyst and the plugged honeycomb structure were pressed and fixed into the can member. In consequence, an exhaust gas purifying device was prepared. It is to be noted that the honeycomb catalyst and plugged honeycomb structure were held by the partition plates so that a distance between the honeycomb catalyst and the plugged honeycomb structure was 5 mm. It is to be noted that in the exhaust gas purifying device, a ratio value (L₁/L₂) of the length L₁ of the honeycomb catalyst along the central axis direction with respect to the length L₂ of the plugged honeycomb structure along the central axis direction was 0.33, and a ratio value (a cell open area ratio) of the open area ratio of the cells in the first inflow side end face of the honeycomb catalyst with respect to the open area ratio of the cells in the second inflow side end face of the plugged honeycomb structure was 1.023. Results are shown in Table 2.

With the prepared exhaust gas purifying device, 'purification ratio', 'PM number emission', 'pressure drop' and 'general judgment' were evaluated by methods as follows. Results are shown in Table 2. In Table 2, 'L₁/L₂ length ratio' indicates a value of a ratio of the length L₁ of the honeycomb catalyst along the central axis direction with respect to the length L₂ of the plugged honeycomb structure along the central axis direction, and 'the cell open area ratio' indicates a value of a ratio of the open area ratio of the cells in the first inflow side end face of the honeycomb catalyst with respect to the open area ratio of the cells in the second inflow side end face of the plugged honeycomb structure.

The porosity of the partition walls and the average pore diameter of the partition walls were measured by a mercury porosimeter. Moreover, 'the thickness of the partition walls' was measured by using a scanning electron microscope (SEM).

### [Measuring Method of Purification Ratio]

Each of exhaust gas purifying devices obtained in examples and comparative examples is attached to an exhaust system of a car on which a direct injection type gasoline engine having a displacement of 2.0 liters is mounted. Afterward, as a vehicle test by a chassis dynamo, an operation is performed on operation conditions of European regulation operation mode, and emissions of carbon monoxide, hydrocarbon and nitrogen oxide in an exhaust gas during the operation are measured to obtain an emission value. The obtained emission value is compared with European Euro5 regulation value. When the emissions of all components (carbon monoxide, hydrocarbon and nitrogen oxide) are below the regulation value, the emissions are regarded as acceptable 'A'. When the emissions are not below the regulation value, the emissions are regarded as unacceptable 'B'. It is to be noted that the present evaluation results are shown in 'the purification ratio (CO, HC and NOx)' of Table 2.

### [Measuring Method of PM Number Emission]

Each of the exhaust gas purifying devices obtained in the examples and comparative examples is attached to the exhaust system of the car on which the direct injection type gasoline engine having a displacement of 2.0 liters is mounted. Afterward, as the vehicle test by the chassis dynamo, then operation is performed on the operation conditions of the European regulation operation mode, and the number of particles of PM in the exhaust gas discharged during the operation is measured by a method according to European Euro6 regulation scheme. It is to be noted that when the number of the discharged particles of the PM is 6×10¹¹ particles/km or less, the conditions of the European Euro6 regulation scheme are satisfied. It is to be noted that the present evaluation results are shown in 'PM discharge (particles/km)' of Table 2.

### [Measuring Method of Pressure Drop]

In an engine bench test of the direct injection type gasoline engine having a displacement of 2.0 liters, first a flow through type honeycomb structure having a cell density of 93 cells/cm², a partition wall thickness (a rib thickness) of 0.076 mm, a diameter of 105.7 mm and a length of 114 mm in a longitudinal direction is attached to the exhaust system of the engine. At this time, a pressure drop during an engine full load operation is measured as a reference value. On the other hand, after attaching each of the exhaust gas purifying devices obtained in the respective examples and comparative examples, the pressure drop is measured on engine full load conditions similar to the above conditions. Afterward, when an increase of the pressure drop is less than 10 kPa with respect to the above reference value, the result is regarded as acceptable 'A'. When the increase of the pressure drop is 10 kPa or more, the result is regarded as unacceptable 'B'. It is to be noted that the present evaluation result is shown in 'the pressure drop' of Table 2.

### [General Judgment]

Among the above evaluations of [purification ratio], [PM number emission] and [pressure drop], when all the evaluations were regarded as acceptable 'A' (with the proviso that as to [PM number emission], when the number of the discharged particles of the PM was 6×10¹¹ particles/km or less), the result was regarded as acceptable 'A'. When even one of the evaluations is regarded as unacceptable 'B' (with the proviso that as to [PM number emission], when the number of the discharged particles of the PM exceeded 6×10¹¹ particles/km), the result was regarded as unacceptable 'B'.

**[Table 1]**

| | Honeycomb catalyst | | | | | | | | | | Plugged honeycomb stucture | | | | | | | |
|---|---|---|---|---|---|---|---|---|---|---|---|---|---|---|---|---|---|---|
| | Diameter | Length | L₁/D₁ | Cell density | Rib thickness | Porosity | Cell open area ratio | Pore diameter | Catalyst bad amount | Noble metal amount | Diameter | Length | L₂/D₂ | Cell density | Rib thickness | Porosity | Cell open area ratio | Pore diameter |
| | (mm) | (mm) | | (cells/cm²) | (mm) | (%) | (%) | (µm) | (g/L) | (g/µL) | (mm) | (mm) | | (cells/cm²) | (mm) | (%) | (%) | (µm) |
| Example 1 | 110 | 20 | 02 | 62.0 | 0.076 | 28.0 | 0.884 | 4 | 220 | 1 | 110 | 60 | 0.5 | 7.8 | 0.254 | 38.0 | 0.864 | 8 |
| Example 2 | 110 | 30 | 0.3 | 62.0 | 0.102 | 28.0 | 0.846 | 4 | 220 | 2 | 110 | 110 | 1.0 | 7.8 | 0.356 | 40.0 | 0.811 | 10 |
| Example 3 | 110 | 40 | 0.4 | 93.0 | 0.051 | 28.0 | 0.904 | 4 | 250 | 1 | 110 | 155 | 1.4 | 7.8 | 0.406 | 42.0 | 0.787 | 12 |
| Example 4 | 110 | 15 | 0.1 | 93.0 | 0.076 | 28.0 | 0.858 | 4 | 250 | 2 | 110 | 60 | 0.5 | 7.8 | 0.457 | 50.0 | 0.762 | 20 |
| Example 5 | 110 | 50 | 0.5 | 139.5 | 0.051 | 28.0 | 0.884 | 4 | 250 | 2 | 110 | 110 | 1.0 | 7.8 | 0.508 | 65.0 | 0.737 | 35 |
| Example 6 | 110 | 20 | 0.2 | 186.0 | 0.051 | 28.0 | 0.866 | 4 | 300 | 2 | 110 | 155 | 1.4 | 7.8 | 0.610 | 65.0 | 0.689 | 38 |
| Example 7 | 110 | 20 | 02 | 62.0 | 0.076 | 28.0 | 0.884 | 4 | 300 | 2 | 110 | 60 | 0.5 | 15.5 | 0.178 | 38.0 | 0.865 | 8 |
| Example 8 | 110 | 30 | 0.3 | 61.0 | 0.102 | 28.0 | 0.846 | 4 | 300 | 3 | 110 | 110 | 1.0 | 15.5 | 0.254 | 40.0 | 0.810 | 10 |
| Example 9 | 110 | 40 | 0.4 | 93.0 | 0.051 | 28.0 | 0.904 | 4 | 300 | 3 | 110 | 155 | 1.4 | 15.5 | 0.305 | 42.0 | 0.774 | 12 |
| Example 10 | 110 | 15 | 0.1 | 93.0 | 0.076 | 28.0 | 0.858 | 4 | 300 | 3 | 110 | 60 | 0.5 | 15.5 | 0.356 | 50.0 | 0.740 | 20 |
| Example 11 | 110 | 50 | 0.5 | 139.5 | 0.051 | 28.0 | 0.884 | 4 | 350 | 3 | 110 | 110 | 1.0 | 15.5 | 0.406 | 65.0 | 0.706 | 35 |
| Example 12 | 110 | 20 | 02 | 186.0 | 0.051 | 28.0 | 0.866 | 4 | 350 | 3 | 110 | 155 | 1.4 | 15.5 | 0.457 | 65.0 | 0.672 | 38 |
| Example 13 | 110 | 20 | 02 | 62.0 | 0.076 | 28.0 | 0.884 | 4 | 220 | 2 | 110 | 60 | 0.5 | 31.0 | 0.102 | 38.0 | 0.864 | 8 |
| Example 14 | 110 | 30 | 0.3 | 62.0 | 0.102 | 28.0 | 0.846 | 4 | 220 | 2 | 110 | 110 | 1.0 | 31.0 | 0203 | 40.0 | 0.786 | 10 |
| Example 15 | 110 | 40 | 0.4 | 93.0 | 0.051 | 28.0 | 0.904 | 4 | 220 | 2 | 110 | 155 | 1.4 | 31.0 | 0.254 | 420 | 0.737 | 12 |
| Example 16 | 110 | 15 | 0.1 | 93.0 | 0.076 | 28.0 | 0.858 | 4 | 250 | 3 | 110 | 60 | 0.5 | 31.0 | 0.356 | 50.0 | 0.643 | 20 |
| Example 17 | 110 | 50 | 0.5 | 139.5 | 0.051 | 28.0 | 0.884 | 4 | 250 | 3 | 110 | 110 | 1.0 | 31.0 | 0.406 | 65.0 | 0.599 | 35 |
| Example 18 | 110 | 20 | 02 | 186.0 | 0.051 | 28.0 | 0.866 | 4 | 250 | 3 | 110 | 155 | 1.4 | 31.0 | 0.508 | 65.0 | 0.514 | 38 |
| Example 19 | 110 | 20 | 02 | 62.0 | 0.076 | 28.0 | 0.884 | 4 | 210 | 2 | 110 | 60 | 0.5 | 46.5 | 0.102 | 38.0 | 0.866 | 8 |
| Example 20 | 110 | 30 | 0.3 | 62.0 | 0.102 | 28.0 | 0.846 | 4 | 250 | 2 | 110 | 110 | 1.0 | 46.5 | 0.152 | 40.0 | 0.803 | 10 |
| Example 21 | 110 | 40 | 0.4 | 93.0 | 0.051 | 28.0 | 0.904 | 4 | 250 | 2 | 110 | 155 | 1.4 | 46.5 | 0.254 | 420 | 0.684 | 12 |
| Example 22 | 110 | 15 | 0.1 | 93.0 | 0.076 | 28.0 | 0.858 | 4 | 300 | 3 | 110 | 60 | 0.5 | 46.5 | 0.356 | 50.0 | 0.574 | 20 |
| Example 23 | 110 | 50 | 0.5 | 139.5 | 0.051 | 28.0 | 0.884 | 4 | 300 | 3 | 110 | 110 | 1.0 | 46.5 | 0.406 | 65.0 | 0.523 | 35 |
| Example 24 | 110 | 20 | 02 | 186.0 | 0.051 | 28.0 | 0.866 | 4 | 300 | 3 | 110 | 155 | 1.4 | 46.5 | 0.457 | 65.0 | 0.474 | 38 |
| Example 25 | 110 | 20 | 02 | 186.0 | 0.051 | 28.0 | 0.866 | 4 | 300 | 3 | 110 | 155 | 1.4 | 46.5 | 0.457 | 65.0 | 0.474 | 50 |
| Example 26 | 90 | 15 | 02 | 93.0 | 0.076 | 28.0 | 0.858 | 4 | 250 | 2 | 110 | 60 | 0.5 | 46.5 | 0.356 | 50.0 | 0.574 | 20 |
| Example 27 | 70 | 15 | 02 | 93.0 | 0.076 | 28.0 | 0.858 | 4 | 250 | 2 | 110 | 60 | 0.5 | 46.5 | 0.356 | 50.0 | 0.574 | 20 |
| Comparative Example 1 | 110 | 15 | 0.1 | 46.5 | 0.356 | 28.0 | 0.574 | 4 | 300 | 2 | 110 | 60 | 0.5 | 93.0 | 0.076 | 50.0 | 0.858 | 20 |
| comparative Example 2 | 110 | 60 | 0.5 | 93.0 | 0.051 | 28.0 | 0.904 | 4 | 300 | 2 | 110 | 110 | 1.0 | 46.5 | 0.254 | 42.0 | 0.684 | 12 |
| Commparative Example 3 | 110 | 120 | 1.1 | 93.0 | 0.051 | 28.0 | 0.904 | 4 | 300 | 2 | 110 | 110 | 1.0 | 46.5 | 0.254 | 420 | 0.684 | 12 |

**[Table 2]**

| | L₁/L₂ length ratio | Cell open area ratio | Purification ratio (CO,HC,NOx) | PM discharge (particles/km) | Pressure drop | General judgment |
|---|---|---|---|---|---|---|
| Example 1 | 0.33 | 1.023 | A | 1×10¹¹ | A | A |
| Example 2 | 0.27 | 1.043 | A | 1×10¹¹ | A | A |
| Example 3 | 0.26 | 1.149 | A | 3×10¹¹ | A | A |
| Example 4 | 0.25 | 1.126 | A | 4×10¹¹ | A | A |
| Example 5 | 0.45 | 1.199 | A | 5×10¹¹ | A | A |
| Example 6 | 0.13 | 1.257 | A | 5×10¹¹ | A | A |
| Example 7 | 0.33 | 1.022 | A | 1×10¹¹ | A | A |
| Example 8 | 0.27 | 1.044 | A | 1×10¹¹ | A | A |
| Example 9 | 0.26 | 1.168 | A | 3×10¹¹ | A | A |
| Example 10 | 0.25 | 1.159 | A | 4×10¹¹ | A | A |
| Example 11 | 0.45 | 1.252 | A | 5×10¹¹ | A | A |
| Example 12 | 0.13 | 1.289 | A | 5×10¹¹ | A | A |
| Example 13 | 0.33 | 1.023 | A | 1×10¹¹ | A | A |
| Example 14 | 0.27 | 1.076 | A | 1×10¹¹ | A | A |
| Example 15 | 0.26 | 1.227 | A | 3×10¹¹ | A | A |
| Example 16 | 0.25 | 1.334 | A | 3×10¹¹ | A | A |
| Example 17 | 0.45 | 1.476 | A | 5×10¹¹ | A | A |
| Example 18 | 0.13 | 1.685 | A | 5×10¹¹ | A | A |
| Example 19 | 0.33 | 1.021 | A | 1×10¹¹ | A | A |
| Example 20 | 0.27 | 1.054 | A | 1×10¹¹ | A | A |
| Example 21 | 0.26 | 1.322 | A | 3×10¹¹ | A | A |
| Example 22 | 0.25 | 1.495 | A | 3×10¹¹ | A | A |
| Example 23 | 0.45 | 1.690 | A | 3×10¹¹ | A | A |
| Example 24 | 0.13 | 1.827 | A | 3×10¹¹ | A | A |
| Example 25 | 0.13 | 1.827 | A | 6×10¹¹ | A | A |
| Example 26 | 0.25 | 1.495 | A | 3×10¹¹ | A | A |
| Example 27 | 0.25 | 1.495 | A | 3×10¹¹ | A | A |
| Comparative Example 1 | 0.25 | 0.669 | B | 3×10¹¹ | A | B |
| Comparative Example 2 | 0.55 | 1.322 | B | 4×10¹¹ | A | B |
| Comparative Example 3 | 1.09 | 1.322 | B | 5×10¹¹ | B | B |

### (Examples 2 to 27 and Comparative Examples 1 to 3)

Honeycomb catalysts were obtained in the same manner as in Example 1 except that diameters, lengths, L₁/D₁, cell densities, rib thicknesses, porosities, cell open area ratios, pore diameters, catalyst load amounts and noble metal amounts were set as shown in Table 1. Moreover, plugged honeycomb structures were obtained in the same manner as in Example 1 except that diameters, lengths, L₂/D₂, cell densities, rib thicknesses, porosities, cell open area ratios and pore diameters were set as shown in Table 1. Afterward, exhaust gas purifying devices (the exhaust gas purifying devices of Examples 2 to 27 and Comparative Examples 1 to 3) were prepared in the same manner as in Example 1. As to the prepared exhaust gas purifying devices, 'purification ratio', 'PM number emission', 'pressure drop' and 'general judgment' were evaluated by the above methods in the same manner as in Example 1. Results are shown in Table 2.

### [Preparation of Honeycomb Catalyst] (Honeycomb Catalyst Forming Step)

A honeycomb catalyst was prepared in the same manner as in Example 1 to obtain the honeycomb catalyst of the present example. It is to be noted that in columns of 'the honeycomb catalyst' of Table 3, 'length' indicates the length of the honeycomb catalyst along a central axis direction, 'L_{1/}D₁' indicates a value of a ratio of the length L₁ of the honeycomb catalyst along the central axis direction with respect to a diameter D₁ of an inflow side end face of the honeycomb catalyst, 'rib thickness' indicates the thickness of the partition walls of a first honeycomb base material and 'pore diameter' indicates the average pore diameter.

### [Preparation of Plugged Honeycomb Catalyst] (Plugged Honeycomb Structure Forming Step)

First, as a cordierite forming material, alumina, aluminum hydroxide, kaoline, talc and silica were used, and 13 parts by mass of a pore former, 35 parts by mass of a dispersion medium, 6 parts by mass of an organic binder and 0.5 part by mass of a dispersant were added to 100 parts by mass of the cordierite forming material, respectively, mixed and kneaded to prepare a kneaded clay. As the dispersion medium, water was used, as the pore former, coke having an average particle diameter of 1 to 10 µm was used, as the organic binder, hydroxypropyl methyl cellulose was used, and as the dispersant, ethylene glycol was used. As the pore former, resin balloon, water absorbing resin or the like may be used. The particle diameters and amount of the pore former can appropriately be controlled to control the pore diameters and porosity of the partition walls.

Next, the kneaded clay was extruded by using a predetermined die, to form a formed honeycomb article having a quadrangular cell shape and entirely having a columnar (cylindrical) shape. Subsequently, the formed honeycomb article was dried by a microwave drier, and further completely dried by a hot air drier, and both end faces of the formed honeycomb article were cut to obtain a predetermined dimension. Next, a mask was applied to open frontal areas of cells of a part of one end face of the formed honeycomb article. The end of the article including the applied mask was immersed into a plugging slurry containing the cordierite forming material, whereby the plugging slurry was charged into the open frontal areas of predetermined cells to alternately arrange the predetermined cells having formed plugged portions and the remaining cells having both opened ends in an outflow side end face so that the outflow side end face of the article had a checkered pattern. Afterward, the formed honeycomb article into which the plugging slurry was charged was dried by the hot air drier, and further fired at 1410 to 1440°C for five hours, to prepare the plugged honeycomb structure in which any plugged portion was not formed in an inflow side end of the article and the plugged portions were formed in the outflow side end thereof.

Next, mixed particles (a specific surface area of 50 m²/g) of γAl₁O₁ having an average particle diameter of 100 µm and CeO₂ having an average particle diameter of 100 µm were wet-ground by a ball mill to obtain ground particles having an average particle diameter of 5 µm. The obtained ground particles were immersed into a solution containing Pt and Rh to load Pt and Rh into pores of the ground particles. Subsequently, acetic acid and water were added to the ground particles including loaded Pt and Rh to obtain a coating slurry. The end of the prepared plugged honeycomb structure on an inflow side thereof was immersed into the obtained coating slurry. Afterward, while the end of the structure on the inflow side was immersed, the coating slurry was vacuum-sucked through the end face of the plugged honeycomb structure on an outflow side thereof, whereby partition walls of the plugged honeycomb structure were coated with the coating slurry to form a catalyst layer. Afterward, the structure was dried and fired at 600°C for 3 hours, to prepare the plugged honeycomb structure (a plugged honeycomb catalyst) including the catalyst loaded onto the partition walls.

The amount of oxide (γAl₂O₃ and CeO₂) to be loaded per unit volume of the plugged honeycomb catalyst was from 10 to 150 g/L, the amount of Pt to be loaded per unit volume of the plugged honeycomb catalyst was from 0.5 to 1 g/L, and the amount of Rh to be loaded per unit volume of the plugged honeycomb catalyst was from 0.1 to 0.2 g/L. Moreover, the average pore diameter of the catalyst layer was 5 µm, which was equal to the average particle diameter of the ground particles.

The prepared plugged honeycomb catalyst had a diameter of 110 mm, a length of 60 mm along a central axis direction, a ratio value (L₂/D₂) of 0.5 of the length L₂ along the central axis direction with respect to a diameter D₂ of a second inflow side end face of a second honeycomb base material, a cell density of 7.8 cells/cm², a rib thickness (a partition wall thickness) of 0.254 mm, a partition wall porosity of 35.0%, a cell open area ratio of 0.864%, a partition wall average pore diameter of 7 µm, a catalyst load amount of 20 g/L and a noble metal amount of 0.5 g/L. Results are shown in Table 3.

It is to be noted that in columns of 'the plugged honeycomb catalyst of Table 3, 'the length' indicates the length of the plugged honeycomb catalyst along the central axis direction, 'L₂/D₂' indicates the value of the ratio of the length L₂ of the plugged honeycomb catalyst along the central axis direction with respect to the diameter D₂ of the inflow side end face of the plugged honeycomb catalyst, 'the rib thickness' indicates the thickness of each partition wall of the second honeycomb base material and 'the pore diameter' indicates the average pore diameter.

The prepared honeycomb catalyst and plugged honeycomb catalyst were used to prepare an exhaust gas purifying device in the same manner as in Example 1. It is to be noted that in the prepared exhaust gas purifying device, the ratio value (L_{1/}L₂) of the length L₁ of the honeycomb catalyst along the central axis direction with respect to the length L₂ of the plugged honeycomb structure along the central axis direction was 0.33, and a ratio value (the cell open area ratio) of the open area ratio of the cells in the first inflow side end face of the honeycomb catalyst with respect to the open area ratio of the cells in the second inflow side end face of the plugged honeycomb structure was 1.023. Results are shown in Table 4. Moreover, as to the prepared exhaust gas purifying device, 'purification ratio', 'PM number emission', 'pressure drop' and 'general judgment' were evaluated by the above method in the same manner as in Example 1. Results are shown in Table 4.

**[Table 3]**

| | Honeycomb catalyst | | | | | | | | | | Plugged honeycomb catalyst | | | | | | | | | |
|---|---|---|---|---|---|---|---|---|---|---|---|---|---|---|---|---|---|---|---|---|
| | Diameter | Length | L₁/D₁ | Cell density | Rib thickness | Porosity | cell open area ratio (%) | Pore diameter | Catalyst load amount | Noble metal amount | Diameter | Length | L₂/D₂ | Cell density | Rib thickness | Porosity | Cell open area ratio (%) | Pore diameter | Catalyst load amount | Noble metal amount |
| | (mm) | (mm) | | (cells/cm²) | (mm) | (%) | | (µm) | (g/L) | (g/L) | (mm) | (mm) | | (cells/cm²) | (mm) | (%) | | (µm) | (g/L) | (g/L) |
| Example 28 | 110 | 20 | 0.2 | 62.0 | 0.076 | 0.884 | 28.0 | 4 | 220 | 1 | 110 | 60 | 0.5 | 7.8 | 0.254 | 35.0 | 0.864 | 7 | 20 | 0.5 |
| Example 29 | 110 | 30 | 0.3 | 62.0 | 0.102 | 0.846 | 28.0 | 4 | 220 | 2 | 110 | 110 | 1.0 | 7.8 | 0.356 | 37.0 | 0.811 | 8 | 30 | 0.5 |
| Example 30 | 110 | 40 | 0.4 | 93.0 | 0.051 | 0.904 | 28.0 | 4 | 250 | 1 | 110 | 155 | 1.4 | 7.8 | 0.406 | 38.0 | 0.787 | 10 | 80 | 0.5 |
| Example 31 | 110 | 15 | 0.1 | 93.0 | 0.076 | 0.858 | 28.0 | 4 | 250 | 2 | 110 | 60 | 0.5 | 7.8 | 0.457 | 45.0 | 0.762 | 18 | 150 | 0.5 |
| Example 32 | 110 | 50 | 0.5 | 139.5 | 0.051 | 0.884 | 28.0 | 4 | 250 | 2 | 110 | 110 | 1.0 | 7.8 | 0.508 | 60.0 | 0.737 | 33 | 150 | 0.5 |
| Example 33 | 110 | 20 | 0.2 | 186.0 | 0.051 | 0.866 | 28.0 | 4 | 300 | 2 | 110 | 155 | 1.4 | 7.8 | 0.610 | 60.0 | 0.689 | 35 | 150 | 0.5 |
| Example 34 | 110 | 20 | 02 | 62.0 | 0.076 | 0.884 | 28.0 | 4 | 300 | 2 | 110 | 60 | 0.5 | 15.5 | 0.178 | 35.0 | 0.865 | 7 | 30 | 0.6 |
| Example 35 | 110 | 30 | 0.3 | 62.0 | 0.102 | 0.846 | 28.0 | 4 | 300 | 3 | 110 | 110 | 1.0 | 15.5 | 0.254 | 38.0 | 0.810 | 8 | 50 | 0.6 |
| Example 36 | 110 | 40 | 0.4 | 93.0 | 0.051 | 0.904 | 28.0 | 4 | 300 | 3 | 110 | 155 | 1.4 | 15.5 | 0.305 | 42.0 | 0.774 | 10 | 140 | 0.6 |
| Example 37 | 110 | 15 | 0.1 | 93.0 | 0.076 | 0.858 | 28.0 | 4 | 300 | 3 | 110 | 60 | 0.5 | 15.5 | 0.356 | 45.0 | 0.740 | 18 | 140 | 0.6 |
| Example 38 | 110 | 50 | 0.5 | 139.5 | 0.051 | 0.884 | 28.0 | 4 | 350 | 3 | 110 | 110 | 1.0 | 15.5 | 0.406 | 61.0 | 0.706 | 33 | 140 | 0.6 |
| Example 39 | 110 | 20 | 02 | 186.0 | 0.051 | 0.866 | 28.0 | 4 | 350 | 3 | 110 | 155 | 1.4 | 15.5 | 0.457 | 61.0 | 0.672 | 35 | 140 | 0.6 |
| Example 40 | 110 | 20 | 0.2 | 62.0 | 0.076 | 0.884 | 28.0 | 4 | 220 | 2 | 110 | 60 | 0.5 | 31.0 | 0.102 | 35.0 | 0.864 | 7 | 50 | 0.6 |
| Example 41 | 110 | 30 | 0.3 | 62.0 | 0.102 | 0.846 | 28.0 | 4 | 220 | 2 | 110 | 110 | 1.0 | 31.0 | 0.203 | 38.0 | 0.786 | 8 | 80 | 0.6 |
| Example 42 | 110 | 40 | 0.4 | 93.0 | 0.051 | 0.904 | 28.0 | 4 | 220 | 2 | 110 | 155 | 1.4 | 31.0 | 0.254 | 38.0 | 0.737 | 10 | 140 | 0.6 |
| Example 43 | 110 | 15 | 0.1 | 93.0 | 0.076 | 0.858 | 28.0 | 4 | 250 | 3 | 110 | 60 | 0.5 | 31.0 | 0.356 | 45.0 | 0.643 | 15 | 140 | 0.6 |
| Example 44 | 110 | 50 | 0.5 | 139.5 | 0.051 | 0.884 | 28.0 | 4 | 250 | 3 | 110 | 110 | 1.0 | 31.0 | 0.406 | 61.0 | 0.599 | 30 | 140 | 0.6 |
| Example 45 | 110 | 20 | 0.2 | 186.0 | 0.051 | 0.866 | 28.0 | 4 | 250 | 3 | 110 | 155 | 1.4 | 31.0 | 0.508 | 61.0 | 0.514 | 32 | 140 | 0.6 |
| Example 46 | 110 | 20 | 02 | 62.0 | 0.076 | 0.884 | 28.0 | 4 | 210 | 2 | 110 | 60 | 0.5 | 46.5 | 0.102 | 35.0 | 0.866 | 6 | 60 | 0.5 |
| Example 47 | 110 | 30 | 0.3 | 62.0 | 0.102 | 0.846 | 28.0 | 4 | 250 | 2 | 110 | 110 | 1.0 | 46.5 | 0.152 | 38.0 | 0.803 | 7 | 100 | 0.5 |
| Example 48 | 110 | 40 | 0.4 | 93.0 | 0.051 | 0.904 | 28.0 | 4 | 250 | 2 | 110 | 155 | 1.4 | 46.5 | 0.254 | 38.0 | 0.684 | 10 | 140 | 0.5 |
| Example 49 | 110 | 15 | 0.1 | 93.0 | 0.076 | 0.858 | 28.0 | 4 | 300 | 3 | 110 | 60 | 0.5 | 46.5 | 0.356 | 45.0 | 0.574 | 15 | 140 | 0.5 |
| Example 50 | 110 | 50 | 0.5 | 139.5 | 0.051 | 0.884 | 28.0 | 4 | 300 | 3 | 110 | 110 | 1.0 | 46.5 | 0.406 | 61.0 | 0.523 | 30 | 140 | 0.5 |
| Example 51 | 110 | 20 | 0.2 | 186.0 | 0.051 | 0.866 | 28.0 | 4 | 300 | 3 | 110 | 155 | 1.4 | 46.5 | 0.457 | 61.0 | 0.474 | 32 | 140 | 0.5 |
| Example 52 | 110 | 20 | 0.2 | 186.0 | 0.051 | 0.866 | 28.0 | 4 | 300 | 3 | 110 | 155 | 1.4 | 46.5 | 0.457 | 61.0 | 0.474 | 48 | 140 | 0.5 |
| Example 53 | 90 | 15 | 0.2 | 93.0 | 0.076 | 0.858 | 28.0 | 4 | 250 | 2 | 110 | 60 | 0.5 | 46.5 | 0.356 | 45.0 | 0.574 | 15 | 120 | 0.5 |
| Example 54 | 70 | 15 | 0.2 | 93.0 | 0.076 | 0.858 | 28.0 | 4 | 250 | 2 | 110 | 60 | 0.5 | 46.5 | 0.356 | 45.0 | 0.574 | 15 | 120 | 0.5 |
| Comparative Example 4 | 110 | 15 | 0.1 | 46.5 | 0.356 | 0.574 | 28.0 | 4 | 300 | 2 | 110 | 60 | 0.5 | 93.0 | 0.076 | 50.0 | 0.858 | 15 | 140 | 0.5 |
| Comparative Example 5 | 110 | 60 | 0.5 | 93.0 | 0.051 | 0.904 | 28.0 | 4 | 300 | 2 | 110 | 110 | 1.0 | 46.5 | 0.254 | 42.0 | 0.684 | 10 | 140 | 0.5 |
| Comparative Example 6 | 110 | 8 | 0.1 | 93.0 | 0.051 | 0.904 | 28.0 | 4 | 300 | 2 | 110 | 110 | 1.0 | 46.5 | 0.254 | 42.0 | 0.684 | 10 | 140 | 0.5 |
| Comparative Example 7 | 110 | 15 | 0.1 | 93.0 | 0.076 | 0.858 | 28.0 | 4 | 300 | 3 | 110 | 60 | 0.5 | 46.5 | 0.356 | 49.0 | 0.574 | 15 | 5 | 0.05 |
| Comparative Example 8 | 110 | 15 | 0.1 | 93.0 | 0.076 | 0.858 | 28.0 | 4 | 300 | 3 | 110 | 60 | 0.5 | 46.5 | 0.356 | 45.0 | 0.574 | 15 | 180 | 0.7 |
| Comparative Example 9 | 110 | 15 | 0.1 | 93.0 | 0.076 | 0.858 | 28.0 | 4 | 170 | 0.8 | 110 | 60 | 0.5 | 46.5 | 0.356 | 45.0 | 0.574 | 15 | 140 | 0.5 |
| Comparative Example 10 | 110 | 15 | 0.1 | 93.0 | 0.076 | 0.858 | 28.0 | 4 | 450 | 4 | 110 | 60 | 0.5 | 46.5 | 0.356 | 45.0 | 0.574 | 15 | 140 | 0.5 |
| Comparative Example 11 | 144 | 15 | 0.1 | 93.0 | 0.076 | 0.858 | 28.0 | 4 | 250 | 2 | 110 | 60 | 0.5 | 46.5 | 0.356 | 45.0 | 0.574 | 15 | 120 | 0.5 |

**[Table 4]**

| | L₁/L₂ length ratio | Cell open area ratio | Purification ratio (CO,HC,NOx) | PM discharge (particles/km) | Pressure drop | General judgment |
|---|---|---|---|---|---|---|
| Example 28 | 0.33 | 1.023 | A | 1×10¹¹ | A | A |
| Example 29 | 0.27 | 1.043 | A | 1×10¹¹ | A | A |
| Example 30 | 0.26 | 1.149 | A | 3×10¹¹ | A | A |
| Example 31 | 0.25 | 1.126 | A | 4×10¹¹ | A | A |
| Example 32 | 0.45 | 1.199 | A | 5×10¹¹ | A | A |
| Example 33 | 0.13 | 1.257 | A | 5×10¹¹ | A | A |
| Example 34 | 0.33 | 1.022 | A | 1×10¹¹ | A | A |
| Example 35 | 0.27 | 1.044 | A | 1×10¹¹ | A | A |
| Example 36 | 0.26 | 1.168 | A | 3×10¹¹ | A | A |
| Example 37 | 0.25 | 1.159 | A | 4×10¹¹ | A | A |
| Example 38 | 0.45 | 1.252 | A | 5×10¹¹ | A | A |
| Example 39 | 0.13 | 1.289 | A | 5×10¹¹ | A | A |
| Example 40 | 0.33 | 1.023 | A | 1×10¹¹ | A | A |
| Example 41 | 0.27 | 1.076 | A | 1×10¹¹ | A | A |
| Example 42 | 0.26 | 1.227 | A | 3×10¹¹ | A | A |
| Example 43 | 0.25 | 1.334 | A | 3×10¹¹ | A | A |
| Example 44 | 0.45 | 1.476 | A | 5×10¹¹ | A | A |
| Example 45 | 0.13 | 1.685 | A | 5×10¹¹ | A | A |
| Example 46 | 0.33 | 1.021 | A | 1×10¹¹ | A | A |
| Example 47 | 0.27 | 1.054 | A | 1×10¹¹ | A | A |
| Example 48 | 0.26 | 1.322 | A | 3×10¹¹ | A | A |
| Example 49 | 0.25 | 1.495 | A | 3×10¹¹ | A | A |
| Example 50 | 0.45 | 1.690 | A | 3×10¹¹ | A | A |
| Example 51 | 0.13 | 1.827 | A | 3×10¹¹ | A | A |
| Example 52 | 0.13 | 1.821 | A | 6×10¹¹ | A | A |
| Example 53 | 0.25 | 1.495 | A | 3x10¹¹ | A | A |
| Example 54 | 0.25 | 1.495 | A | 3×10¹¹ | A | A |
| Comparative Example 4 | 0.25 | 0.669 | B | 3×10¹¹ | A | B |
| Comparative Example 5 | 0.55 | 1.322 | A | 3×10¹¹ | B | B |
| Comparative Example 6 | 0.07 | 1.322 | B | 3×10¹¹ | A | B |
| Comparative Example 7 | 0.25 | 1.495 | B | 3×1011 | A | B |
| Comparative Example 8 | 0.25 | 1.495 | A | 3×1011 | B | B |
| Comparative Example 9 | 0.25 | 1.495 | A | 3×1011 | A | B |
| Comparative Example 10 | 0.25 | 1.495 | A | 3×1011 | B | B |
| Comparative Example 11 | 0.25 | 1.495 | B | 3×1011 | A | B |

### (Examples 29 to 54 and Comparative Examples 4 to 11)

Honeycomb catalysts were obtained in the same manner as in Example 1 except that diameters, lengths, L₁/D₁, cell densities, rib thicknesses, cell open area ratios, porosities, pore diameters, catalyst load amounts and noble metal amounts were set as shown in Table 3. Moreover, plugged honeycomb catalysts were obtained in the same manner as in Example 28 except that diameters, lengths, L₂/D₂, cell densities, rib thicknesses, cell open area ratios, porosities, pore diameters, catalyst load amounts and noble metal amounts were set as shown in Table 3. Afterward, exhaust gas purifying devices (the exhaust gas purifying devices of Examples 29 to 54 and Comparative Examples 4 to 11) were prepared in the same manner as in Example 1. As to the prepared exhaust gas purifying devices, 'purification ratio', 'PM number emission', 'pressure drop' and 'general judgment' were evaluated by the above methods in the same manner as in Example 1. Results are shown in Table 4.

As apparent from Table 2 and Table 4, it can be confirmed that the exhaust gas purifying devices of Examples 1 to 54 can efficiently remove fine particles in an exhaust gas discharged from a direct injection type gasoline engine, have a less increase of pressure drop, and can purify the exhaust gas containing CO, HC and NOx with a high efficiency immediately after the start of the engine, as compared with the exhaust gas purifying devices of Comparative Examples 1 to 11.

An exhaust gas purifying device of the present invention can be used as a filter which purifies an exhaust gas discharged from a direct injection gasoline engine.

### Description of Reference Numerals

2: first inflow side end face, 3: first outflow side end face, 4 and 14: cell, 14a: predetermined cell, 14b: remaining cell, 5 and 15: partition wall, 6: first honeycomb base material, 8: plugged portion, 10: honeycomb catalyst, 12: second inflow side end face, 13: second outflow side end face, 16: second honeycomb base material, 20: plugged honeycomb structure, 22: inflow port, 23: outflow port, 30: can member, 40: cushion material, 42: partition plate, 100: exhaust gas purifying device, G₁: exhaust gas, and G₂: purified exhaust gas.

## Claims

1. An exhaust gas purifying device comprising:
a honeycomb catalyst (10) including a first honeycomb base material (6) having porous partition walls (5) arranged to form a plurality of cells (4) which extend through the first honeycomb base material from a first inflow side end face (2) to a first outflow side end face (3) and provide a plurality of through channels for a fluid, and a three way catalyst loaded onto the first honeycomb base material, the cells having both ends open;
a plugged honeycomb structure (20) including a second honeycomb base material (16) having porous partition walls (15) arranged to form a plurality of cells (14) which extend through the second honeycomb base material from a second inflow side end face (12) to a second outflow side end face (13) and provide through channels for the fluid, and plugged portions (8) arranged to plug open frontal areas of predetermined cells (14a) in the second outflow side end face of the second honeycomb base material and open frontal areas of the remaining cells (14b) in the second inflow side end face of the second honeycomb base material; and
a can member (30) containing the honeycomb catalyst (10) and the plugged honeycomb structure (20) and having an inflow port (22) through which an exhaust gas flows into the can member and an outflow port (23) through which the purified exhaust gas flows out of the can member,
wherein the honeycomb catalyst (10) is disposed in the can member on an inflow port side thereof so that the first inflow side end face (2) faces the inflow port side of the can member, the plugged honeycomb structure is disposed in the can member on an outflow port side thereof so that the second outflow side end face (13) faces the outflow port side of the can member,
the value of a ratio of a length (L1) of the honeycomb catalyst (10) along a central axis direction with respect to a length (L2) of the plugged honeycomb structure (20) along the central axis direction is from 0.1 to 0.5,
either no catalyst is loaded onto the plugged honeycomb structure (20), or a catalyst is loaded onto the plugged honeycomb structure (20) and the amount of the catalyst loaded per unit volume of the plugged honeycomb structure (20) is smaller than the amount of the three way catalyst loaded per unit volume of the honeycomb catalyst (10),
the cell density of the first honeycomb base material (6) is larger than that of the second honeycomb base material (16),
the open area ratio in the first inflow side end face (2) of the honeycomb catalyst (10) is larger than that in the second inflow side end face (12) of the plugged honeycomb structure (20), and
the diameter of the honeycomb catalyst (10) is equal to or smaller than that of the plugged honeycomb structure (20).

2. The exhaust gas purifying device according to claim 1, wherein the amount of the three way catalyst loaded per unit volume of the honeycomb catalyst (10) is from 200 to 400 g/L.

3. The exhaust gas purifying device according to claim 1 or 2, wherein the porosity of the partition walls of the first honeycomb base material (6) is smaller than that of the partition walls of the second honeycomb base material (16).

4. The exhaust gas purifying device according to any one of claims 1 to 3, wherein the diameter of the honeycomb catalyst (10) is from 50 to 80% of the diameter of the plugged honeycomb structure (20).

5. The exhaust gas purifying device according to any one of claims 1 to 4, wherein in the first honeycomb base material (6), the thickness of the partition walls is from 50.8 to 101.6 µm, the cell density is from 32 to 186 cells/cm², the porosity of the partition walls is from 20 to 50%, and the value of a ratio of a length L₁ of the first honeycomb base material (6) along the central axis direction with respect to a diameter D₁ of the first inflow side end face (2) is from 0.1 to 0.4.

6. The exhaust gas purifying device according to any one of claims 1 to 5, wherein in the second honeycomb base material (16), the thickness of the partition walls is from 127 to 508 µm, the cell density is from 7.7 to 46.5 cells/cm², the porosity of the partition walls is from 35 to 80%, the value of a ratio of a length L₂ of the second honeycomb base material (16) along the central axis direction with respect to a diameter D₂ of the second inflow side end face (12) is from 0.5 to 1.5, and an average pore diameter of the partition walls is from 7 to 40 µm.

7. The exhaust gas purifying device according to any one of claims 1 to 6, wherein the distance between the honeycomb catalyst (10) and the plugged honeycomb structure (20) is from 1 to 20 mm.

## Patentansprüche

1. Abgasreinigungsvorrichtung, umfassend:
einen Wabenkatalysator (10), der ein erstes Wabenbasismaterial (6) mit porösen Trennwänden (5), die angeordnet sind, um eine Vielzahl von Zellen (4) auszubilden, die sich durch das erste Wabenbasismaterial hindurch von einer ersten Einströmungsseitenendfläche (2) zu einer ersten Ausströmungsseitenendfläche (3) erstrecken und eine Vielzahl von Durchlasskanälen für ein Fluid bereitstellen, und einen Dreiwegkatalysator umfasst, der auf das erste Wabenbasismaterial aufgebracht ist, wobei beide Enden der Zellen offen sind;
eine verschlossene Wabenstruktur (20), die ein zweites Wabenbasismaterial (16) mit porösen Trennwänden (15), die angeordnet sind, um eine Vielzahl von Zellen (14) auszubilden, die sich durch das zweite Wabenbasismaterial hindurch von einer zweiten Einströmungsseitenendfläche (12) zu einer zweiten Ausströmungsseitenendfläche (13) erstrecken und Durchlasskanäle für das Fluid bereitstellen, und verschlossene Abschnitte (8) umfasst, die angeordnet sind, um offene Vorderbereiche von vorbestimmten Zellen (14a) auf der zweiten Ausströmungsseitenendfläche des zweiten Wabenbasismaterials und offene Vorderbereiche der übrigen Zellen (14b) auf der zweiten Einströmungsseitenendfläche des zweiten Wabenbasismaterials zu verschließen; und
ein Dosenelement (30), das den Wabenkatalysator (10) und die verschlossene Wabenstruktur (20) enthält und einen Einströmungsanschluss (22), durch das ein Abgas in das Dosenelement einströmt, und einen Ausströmungsanschluss (23), durch den das gereinigte Abgas aus dem Dosenelement herausströmt, umfasst,
wobei der Wabenkatalysator (10) im Dosenelement auf einer Einströmungsanschlussseite davon angeordnet ist, sodass die erste Einströmungsseitenendfläche (2) der Einströmungsanschlussseite des Dosenelements gegenüberliegt, und die geschlossene Wabenstruktur im Dosenelement auf einer Ausströmungsanschlussseite davon angeordnet ist, sodass die zweite Ausströmungsseitenendfläche (13) der Ausströmungsanschlussseite des Dosenelements gegenüberliegt, wobei
der Wert des Verhältnisses einer Länge (L₁) des Wabenkatalysators (10) entlang einer Mittelachsenrichtung in Bezug auf eine Länge (L₂) der verschlossenen Wabenstruktur (20) entlang der Mittelachsenrichtung 0,1 bis 0,5 beträgt, wobei
entweder kein Katalysator auf die verschlossene Wabenstruktur (20) aufgebracht ist, oder ein Katalysator auf die verschlossene Wabenstruktur (20) aufgebracht ist und die Menge des aufgebrachten Katalysators pro Einheitsvolumen der verschlossenen Wabenstruktur (20) kleiner ist als die Menge des aufgebrachten Dreiwegkatalysators pro Einheitsvolumen des Wabenkatalysators (10), wobei
die Zelldichte des ersten Wabenbasismaterials (6) größer ist als die des zweiten Wabenbasismaterials (16), wobei
das Verhältnis der offenen Fläche auf der ersten Einströmungsseitenendfläche (2) des Wabenkatalysators (10) größer ist als das auf der zweiten Einströmungsseitenendfläche (12) der verschlossenen Wabenstruktur (20), und wobei
der Durchmesser des Wabenkatalysators (10) gleich oder kleiner ist als der der verschlossenen Wabenstruktur (20).

2. Abgasreinigungsvorrichtung nach Anspruch 1, wobei die Menge des aufgebrachten Dreiwegkatalysators pro Einheitsvolumen des Wabenkatalysators (10) 200 bis 400 g/L beträgt.

3. Abgasreinigungsvorrichtung nach Anspruch 1 oder 2, wobei die Porosität der Trennwände des ersten Wabenbasismaterials (6) kleiner ist als das der Trennwände des zweiten Wabenbasismaterials (16).

4. Abgasreinigungsvorrichtung nach einem der Ansprüche 1 bis 3, wobei der Durchmesser des Wabenkatalysators (10) 50 bis 80 % des Durchmessers der verschlossenen Wabenstruktur (20) beträgt.

5. Abgasreinigungsvorrichtung nach einem der Ansprüche 1 bis 4, wobei im ersten Wabenbasismaterial (6) die Dicke der Trennwände 50,8 bis 101,6 µm beträgt, die Zelldichte 32 bis 186 Zellen/cm² beträgt, die Porosität der Trennwände 20 bis 50 % beträgt und der Wert des Verhältnisses einer Länge L₁ des ersten Wabenbasismaterials (6) entlang der Mittelachsrichtung in Bezug auf einen Durchmesser D₁ der ersten Einströmungsseitenendfläche (2) 0,1 bis 0,4 beträgt.

6. Abgasreinigungsvorrichtung nach einem der Ansprüche 1 bis 5, wobei im zweiten Wabenbasismaterial (16) die Dicke der Trennwände 127 bis 508 µm beträgt, die Zelldichte 7,7 bis 46,5 Zellen/cm² beträgt, die Porosität der Trennwände 35 bis 80 % beträgt und der Wert des Verhältnisses einer Länge L₂ des zweiten Wabenbasismaterials (16) entlang der Mittelachsrichtung in Bezug auf einen Durchmesser D₂ der zweiten Einströmungsseitenendfläche (12) 0,5 bis 1,5 beträgt und ein durchschnittlicher Porendurchmesser der Trennwände 7 bis 40 µm beträgt.

7. Abgasreinigungsvorrichtung nach einem der Ansprüche 1 bis 6, wobei der Abstand zwischen dem Wabenkatalysator (10) und der verschlossenen Wabenstruktur (20) 1 bis 20 mm beträgt.

## Revendications

1. Dispositif de purification des gaz d'échappement comprenant :
un catalyseur en nid d'abeilles (10) comprenant un premier matériau de base de nid d'abeilles (6) comportant des parois de séparation poreuses (5) agencées pour former une pluralité de cellules (4) qui s'étendent à travers le premier matériau de base de nid d'abeilles d'une première face d'extrémité côté flux d'entrée (2) à une première face d'extrémité côté flux de sortie (3) et qui réalisent une pluralité de canaux traversants pour un fluide, et un catalyseur trifonctionnel chargé sur le premier matériau de base de nid d'abeilles, les cellules ayant les deux extrémités ouvertes ;
une structure en nid d'abeilles obturée (20) comprenant un deuxième matériau de base de nid d'abeilles (16) comportant des parois de séparation poreuses (15) agencées pour former une pluralité de cellules (14) qui s'étendent à travers le deuxième matériau de base de nid d'abeilles d'une deuxième face d'extrémité côté flux d'entrée (12) à une deuxième face d'extrémité côté flux de sortie (13) et qui réalisent des canaux traversants pour le fluide, et des parties obturées (8) agencées pour obturer les zones frontales ouvertes de cellules prédéterminées (14a) dans la deuxième face d'extrémité côté flux de sortie du deuxième matériau de base de nid d'abeilles et les zones frontales ouvertes des cellules restantes (14b) dans la deuxième face d'extrémité côté flux d'entrée du deuxième matériau de base de nid d'abeilles ; et
un élément formant contenant (30) contenant le catalyseur en nid d'abeilles (10) et la structure en nid d'abeilles obturée (20) et comportant un orifice de flux d'entrée (22) à travers lequel un gaz d'échappement entre dans l'élément formant contenant et un orifice de flux de sortie (23) à travers lequel le gaz d'échappement purifié sort de l'élément formant contenant,
dans lequel le catalyseur en nid d'abeilles (10) est disposé dans l'élément formant contenant d'un côté d'orifice de flux d'entrée de celui-ci de sorte que la première face d'extrémité côté flux d'entrée (2) soit face au côté d'orifice de flux d'entrée de l'élément formant contenant, la structure en nid d'abeilles obturée est disposée dans l'élément formant contenant d'un côté d'orifice de flux de sortie de celui-ci de sorte que la deuxième face d'extrémité côté flux de sortie (13) soit face au côté d'orifice de flux de sortie de l'élément formant contenant,
la valeur d'un rapport entre une longueur (L₁) du catalyseur en nid d'abeilles (10) le long d'une direction d'axe central et une longueur (L₂) de la structure en nid d'abeilles obturée (20) le long de la direction d'axe central est de 0,1 à 0,5,
soit aucun catalyseur n'est chargé sur la structure en nid d'abeilles obturée (20), soit un catalyseur est chargé sur la structure en nid d'abeilles obturée (20) et la quantité de catalyseur chargé par volume unitaire de la structure en nid d'abeilles obturée (20) est inférieure à la quantité de catalyseur trifonctionnel chargée par volume unitaire du catalyseur en nid d'abeilles (10),
la densité de cellules du premier matériau de base de nid d'abeilles (6) est supérieure à celle du deuxième matériau de base de nid d'abeilles (16),
le rapport des aires ouvertes dans la première face d'extrémité côté flux d'entrée (2) du catalyseur en nid d'abeilles (10) est supérieur à celui dans la deuxième face d'extrémité côté flux d'entrée (12) de la structure en nid d'abeilles obturée (20), et
le diamètre du catalyseur en nid d'abeilles (10) est égal ou inférieur à celui de la structure en nid d'abeilles obturée (20).

2. Dispositif de purification des gaz d'échappement selon la revendication 1, dans lequel la quantité du catalyseur trifonctionnel chargé par volume unitaire du catalyseur en nid d'abeilles (10) est de 200 à 400 g/l.

3. Dispositif de purification des gaz d'échappement selon la revendication 1 ou 2, dans lequel la porosité des parois de séparation du premier matériau de base de nid d'abeilles (6) est inférieure à celle des parois de séparation du deuxième matériau de base de nid d'abeilles (16).

4. Dispositif de purification des gaz d'échappement selon l'une quelconque des revendications 1 à 3, dans lequel le diamètre du catalyseur en nid d'abeilles (10) est égal à 50 à 80 % du diamètre de la structure en nid d'abeilles obturée (20).

5. Dispositif de purification des gaz d'échappement selon l'une quelconque des revendications 1 à 4, dans lequel, dans le premier matériau de base de nid d'abeilles (6), l'épaisseur des parois de séparation est de 50,8 à 101,6 µm, la densité de cellules est de 32 à 186 cellules/cm², la porosité des parois de séparation est de 20 à 50 %, et la valeur d'un rapport entre une longueur L₁ du premier matériau de base de nid d'abeilles (6) le long de la direction d'axe central et un diamètre D₁ de la première face d'extrémité côté flux d'entrée (2) est de 0,1 à 0,4.

6. Dispositif de purification des gaz d'échappement selon l'une quelconque des revendications 1 à 5, dans lequel, dans le deuxième matériau de base de nid d'abeilles (16), l'épaisseur des parois de séparation est de 127 à 508 µm, la densité de cellules est de 7,7 à 46,5 cellules/cm², la porosité des parois de séparation est de 35 à 80 %, la valeur d'un rapport entre une longueur L₂ du deuxième matériau de base de nid d'abeilles (16) le long de la direction d'axe central et un diamètre D₂ de la deuxième face d'extrémité côté flux d'entrée (12) est de 0,5 à 1,5, et un diamètre de pore moyen des parois de séparation est de 7 à 40 µm.

7. Dispositif de purification des gaz d'échappement selon l'une quelconque des revendications 1 à 6, dans lequel la distance entre le catalyseur en nid d'abeilles (10) et la structure en nid d'abeilles obturée (20) est de 1 à 20 mm.
